# EUROPEAN PATENT SPECIFICATION

(11) **EP 4 416 028 B1**
(45) Date of publication and mention of the grant of the patent: **29.07.2026**
(21) Application number: 22801597.0
(22) Date of filing: 27.09.2022
(51) Int. Cl.: B60W 50/00, B60W 50/02, B60W 50/14, B60W 60/00

(54) **APPARATUS AND METHOD FOR ADVANCED DRIVER-ASSISTANCE SYSTEM FEATURE ACTIVATION CONTROL USING DIGITAL MAP AND ON-BOARD SENSING TO CONFIRM SAFE VEHICLE OPERATION**
VORRICHTUNG UND VERFAHREN ZUR STEUERUNG DER AKTIVIERUNG VON FUNKTIONEN EINES ERWEITERTEN FAHRERASSISTENZSYSTEMS MITHILFE EINER DIGITALEN KARTE UND ON-BORD-ERFASSUNG ZUR BESTÄTIGUNG DES SICHEREN FAHRZEUGBETRIEBS
APPAREIL ET PROCÉDÉ POUR COMMANDE D'ACTIVATION DE FONCTIONNALITÉ DE SYSTÈME D'ASSISTANCE À LA CONDUITE AVANCÉE UTILISANT UNE CARTE NUMÉRIQUE ET UNE DÉTECTION EMBARQUÉE POUR CONFIRMER LE FONCTIONNEMENT SÛR D'UN VÉHICULE

(30) Priority: 13.10.2021 US 202117500905
(43) Date of publication of application: 21.08.2024
(73) Proprietor: Arriver Software LLC, Novi, MI 48377 (US)
(72) Inventor: SIDHU, Amardeep, San Diego, California 92121 (US); MAHADEVAN, Shabin, San Diego, California 92121 (US)
(74) Representative: Reddie & Grose LLP
(86) International application number: PCT/US2022/044898
(87) International publication number: WO 2023/064099

(56) References cited:
- EP-A1- 3 822 140
- US-A1- 2018 292 833
- US-A1- 2019 258 249
- US-A1- 2021 223 788

## Description

### CROSS-REFERENCE TO RELATED APPLICATIONS

This application claims the benefit of U.S. Patent Application Ser. No. 17/500,905, filed October 13, 2021, entitled "ADVANCED DRIVER-ASSISTANCE SYSTEMS FEATURE ACTIVATION CONTROL USING DIGITAL MAP AND ON-BOARD SENSING TO CONFIRM SAFE VEHICLE OPERATION," which is assigned to the assignee hereof.

### FIELD OF THE INVENTION

The invention relates to automated driver assistance systems generally and, more particularly, to a method and/or apparatus for implementing advanced driver-assistance systems (ADAS) feature activation control using digital map and on-board sensing to confirm safe vehicle operation.

### BACKGROUND

The operational design domain (ODD) safety concept ensures a Society of Automotive Engineers Level 2-3 (SAE L2+) driver assistance feature is acceptably safe by reducing the exposure to challenging operational situations. Challenging operational situations are operational situations judged to be outside the known capabilities of advanced driver-assistance systems (ADAS) and, therefore, are considered hazardous. The goal of the ODD safety concept is to ensure that challenging operational situations are minimized to less than 1% of operating time when the driver assistance feature is active. The ODD safety concept uses on-board sensing to validate the operational situations reported by a digital map (e.g., electronic horizon) in real time. Lack of precision from satellite-based positioning systems (e.g., GNSS, GPS, etc.) used on production vehicles, and unknown quality of digital maps are two limiting conditions that do not allow map- based localization in the design of a safety solution employed in SAE L2+ advanced driver-assistance systems (ADAS) features. The unknown quality of digital maps can result from map production errors, and/or errors due to changes in reality, for example new construction zones that are not yet reported in the map.

It would be desirable to implement advanced driver-assistance systems (ADAS) feature activation control using digital map and on-board sensing to confirm safe vehicle operation. US 2018/292833 A1 discusses an autonomous driving control method of a vehicle. The method includes recognizing accuracy of a map within the vehicle and determining an available autonomous driving level. Sensor coverage of the vehicle is recognized and an available autonomous driving level for each section among the available autonomous driving levels is determined. A path with autonomous driving level indicated thereon among driving paths is then recommended according to a destination set in the map, and autonomous driving level calculation information is updated in real-time according to a selected path and autonomous information is provided to a driver. US 2019/258249 A1 discusses a driving mode switching control apparatus of a vehicle includes one or more processors collecting data from a map DB, a positioning system, a camera system, and a sensor system in the vehicle; analyzing the collected data to determine a reliability of each data; and designing a driving mode switching of the vehicle based on the determined result of the reliability of the each data to generate mode switching data including an information of the designed driving mode switching. EP 3822140 A1 discusses a control system for a vehicle traveling in a first direction on a road segment. The vehicle has a driver support function for autonomously manoeuvring the vehicle, and the driver support function is capable of operating within an operational design domain (ODD) including a road safety barrier metric and a road characteristics metric. The control system comprises control circuitry configured to obtain data comprising information about a surrounding environment of the vehicle. The information includes road safety barrier data and road characteristics data. Further, the control circuitry is configured to determine a fulfilment of the ODD based on the obtained data by determining a fulfilment of the road safety barrier metric and the road characteristics metric based on the road safety barrier data and the road characteristics data, respectively. Moreover, if the ODD is fulfilled, the control circuitry is configured to generate a first control signal in order to control an availability of the driver support function for the road segment so to make the driver support function available for an occupant of the vehicle. US 2021/223788 A1 discusses a system, method and processor readable medium for identifying an operational design domain (ODD) for operation of an autonomous driving system (ADS). In one aspect, a proposed map is used to generate a geographic dataset. Performance of the ADS is evaluated against the geographic dataset under a range of environment& conditions, thereby identifying a bounded-risk portion of a proposed condition space defined by the proposed map and the range of environmental conditions. The operational design domain is identified based on the bounded-risk portion of the proposed condition space. The ODD can be updated as additional data is received. When a vehicle using the ADS is likely to leave the ODD, an operator can be alerted.

### SUMMARY

The invention is defined in the appended independent claims, to which attention is directed. Optional features are set out in the dependent claims.

### BRIEF DESCRIPTION OF THE FIGURES

Embodiments of the invention will be apparent from the following detailed description and the appended claims and drawings.
FIG. 1 is a block diagram illustrating an advanced driver-assistance systems (ADAS) feature activation control system in accordance with an embodiment of the invention.
FIG. 2 is a block diagram illustrating primary and secondary information paths of an advanced driver-assistance systems (ADAS) feature activation control system in accordance with an embodiment of the invention.
FIG. 3 is a block diagram illustrating map-based and on-board sensor-based information paths of an advanced driver-assistance systems (ADAS) feature activation control system in accordance with an embodiment of the invention.
FIG. 4 is a diagram illustrating an implementation of an advanced driver-assistance systems (ADAS) feature activation control system in accordance with an example embodiment of the present invention.
FIG. 5 is a flow diagram illustrating a method for determining whether to offer or maintain ADAS feature activation in accordance with an embodiment of the invention.
FIG. 6 is a flow diagram illustrating a method of determining map-based operational design domain (ODD) assessments in accordance with an embodiment of the invention.
FIG. 7 is a flow diagram illustrating a method of confirming localization in accordance with an embodiment of the invention.
FIG. 8 is a flow diagram illustrating a method of determining sensor-based ODD assessments in accordance with an embodiment of the invention.
FIG. 9 is a flow diagram illustrating a method of comparing map-based and sensor-based ODD assessments to determine whether to offer or maintain ADAS feature activation in accordance with an embodiment of the invention.
FIG. 10 is a diagram illustrating example applications utilizing an operational design domain aggregator in accordance with an embodiment of the invention.
FIG. 11 is a diagram illustrating a cruising features roadmap through incremental operational design domain expansion using supervised driving as a precursor to unsupervised (autonomous) driving.
FIG. 12 is a diagram illustrating an electronic control module implementing an advanced driver-assistance systems (ADAS) feature activation control system in accordance with an example embodiment of the invention.

### DETAILED DESCRIPTION

Embodiments of the present invention include providing advanced driver-assistance systems (ADAS) feature activation control using digital map and on-board sensing to confirm safe vehicle operation that may (i) overcome lack of positioning accuracy and unknown quality of digital maps through the use of on-board sensing, (ii) implement an operation design domain aggregator (ODDA), (iii) be implemented as part of an active safety domain master, (iv) ensure SAE L2+ driver assistance features are not active when operational situations are outside an operational design domain of a vehicle, (v) obtain primary information about upcoming operational situations that the system may not be able to handle safely using information from a digital map, (vi) obtain secondary and/or redundant information about upcoming operational situations from on-board sensors (e.g., front looking camera (FLC), front looking radar (FLR), and front corner/side radars (FCR/FSR or FCSR)) of a vehicle, (vii) utilize the secondary channel information to identify upcoming unsafe operational situations that the primary channel information is unable to identify and report, (viii) utilize the secondary channel information to verify the presence of upcoming unsafe operational situations reported by the primary channel information, and/or (ix) be implemented as one or more integrated circuits.

The Society of Automotive Engineers (SAE) defines 6 levels of driving automation ranging from 0 (fully manual) to fully autonomous). Level 2 covers partial driving automation, which includes advanced driver-assistance systems (ADAS). In level 2 automation, the vehicle can control both steering and accelerating/decelerating, but a human still monitors the driving tasks and can take control of the vehicle at any time. Level 3 covers conditional driving automation, where the vehicle can detect the environment around the vehicle and make informed decisions on accelerating, lane change, etc. Level 3 automation still requires that a human be able to override and take control if the automation system is unable to execute the task. The operational design domain (ODD) safety concept ensures a driver assistance feature providing automation higher than Society of Automotive Engineers Level 2 (SAE L2+) is acceptably safe by reducing the exposure to challenging operational situations.

In various embodiments, an advanced driver-assistance systems (ADAS) feature activation control system may be provided that may overcome constraints of existing solutions, including lack of positioning accuracy and unknown quality of digital maps. In an example, an operational design domain aggregator (ODDA) may be implemented to determine whether it is safe to activate and/or maintain activation of an ADAS automation feature. In various embodiments, the ODDA may overcome the constraints of existing solutions through the use of on-board sensing functionality of a vehicle. The ODDA may utilize both primary information and secondary information channels to detect upcoming unsafe operational situations. As used herein, unsafe is used to refer to operational situations that are outside the capabilities of the ADAS feature where activation is being restricted.

Information about upcoming operational situations may be divided into a primary information path (or channel) and a secondary information path (or channel). The primary information about upcoming operational situations that the system may not be able to handle safely is generally obtained from a digital map (or electronic horizon). The secondary and/or redundant information about upcoming operational situations is generally obtained from the on-board vehicle sensors (e.g., forward looking camera (FLC), forward looking radar (FLR), front corner/side radar (FCSR), etc.). The secondary channel of information is generally able to identify upcoming unsafe operational situations that the primary channel may be unable to identify and/or report. In addition, using the secondary channel information, the ODDA may be able to verify the presence of upcoming unsafe operational situations reported by the primary channel.

The primary channel generally uses digital map data to identify upcoming operational situations that may be judged to be unsafe. In an example, operational situations that may be judged to be unsafe may include, but are not limited to, lack of a median barrier to oncoming traffic, lack of a guardrail to an off-road area, presence of an intersection, presence of a road legally accessible to vulnerable road users (VRUs), presence of tollbooths and/or border stations, etc. The term vulnerable road users is generally used to identify a category of road users that would present a heightened level of risk for autonomous features (e.g., pedestrians, bicyclists, etc.). In an example, a high-definition (HD) map of unknown quality may reside on a memory unit in the vehicle. Satellite-based and potentially inaccurate positioning is generally used to query the on-board HD map to identify a horizon (e.g., upcoming travel environment) of the vehicle. The potentially inaccurate HD map horizon is generally made available via a map interface to the ODDA and an activation monitor for processing.

The secondary channel may utilize on-board sensors (e.g., FLC, FLR, FCSR, LiDAR, millimeter radar, sonar (ultrasonic), etc.) to determine in real time whether the upcoming operational situation is safe. Static perception, which fuses the information such as image data from the FLC sensor and point cloud data from the FLR and FCSR sensors to report on the presence of various static and dynamic objects to the activation monitor, is generally part of the secondary channel.

The activation monitor generally consumes information from both the primary channel and the secondary channel to assess the static ODD conditions in real time. The static ODD assessment generated by the activation monitor is generally reported to the ODDA.

The FLC and FLR sensors may also report status information (e.g., internal error, signal availability, signal confidence, etc.) directly to the ODDA. A localization module also consumes information from both the primary and secondary channels to confirm the location of the vehicle in real time. The localization module generally reports the confirmed localization to the ODDA and the vehicle location to the map interface.

In various embodiments, the ODDA may be implemented at Automotive Safety Integrity Level (ASIL) A, with a potential to go up to ASIL B. ASIL is a risk classification scheme defined by the ISO 26262 - Functional Safety for Road Vehicles standard, which is an adaptation of the Safety Integrity Level (SIL) used in IEC 61508 for the automotive industry. The ASIL classification helps define the safety criteria necessary to be in line with the ISO 26262 standard. The ASIL is established by performing a risk analysis of a potentially hazardous scenario by looking at the Severity, Exposure, and Controllability of the vehicle operating scenario. The safety goal for the potentially hazardous scenario in turn carries the ASIL requirements. The ASILs range from ASIL D, representing the highest degree of automotive hazardous scenario and highest degree of rigor applied in the assurance of no unacceptable risk from the hazardous scenario, to QM, representing applications with no automotive hazardous scenarios and, therefore, no safety requirements to manage under the ISO 26262 safety processes. The level QM, referring to "Quality Management", means that risk associated with a hazardous event is not unreasonable and does not therefore require safety measures in accordance with ISO 26262. The intervening levels (ASIL C, ASIL B, and ASIL A) are simply a range of intermediate degrees of hazardous scenarios and degrees of assurance required.

The ISO 26262 standard defines functional safety as "the absence of unreasonable risk due to hazards caused by malfunctioning behavior of electrical or electronic systems." ASILs establish safety requirements, based on the probability of the hazardous scenario and severity of harm, for automotive components to be compliant with ISO 26262. Systems like airbags, anti-lock brakes, and power steering require an ASIL D grade, the highest rigor applied to safety assurance-because the risks associated with their failure are the highest. On the other end of the safety spectrum, components like front lights require only an ASIL A grade. Headlights and brake lights generally would be ASIL B, while automatic emergency brake systems would generally be ASIL C due to the risks associated with the unintended deceleration. Implementing the ODDA at ASIL A may ensure that a feature is active only when the static ODD conditions are met. In an example, the ODDA and a mode manager for the feature may be the only functions in the ODD solution implemented as ASIL. All other functions may be non-ASIL or quality management (QM).

At any given time, the ODDA may perform four checks: (i) whether Localization Confirmed reported by a localization module is True; (ii) whether Map Static ODD Information reported by a map interface reports nominal values for all the desired operational situations, (iii) whether Static ODD Assessment reported by an activation monitor reports nominal values for the desired operational situations; and (iv) whether FLC and FLR do not report internal error, signal unavailability, or low signal confidence. In an example, failure of any one of the checks may result in the ODDA reporting Static ODD Permission as False. In another example, any deviation between the primary channel and the secondary channel (e.g., map reporting presence of safety barriers but sensor fusion reporting missing safety barriers, etc.) may result in deactivation along with error reporting to a fault and diagnostic handling module. The ODDA also may perform latent fault checks against the
map, the vision-based sensor, and the radar-based sensors. The ODDA may use the fault check information for error reporting to the fault and diagnostic handling module. The fault and diagnostic handling module is outside the scope of the invention and, therefore, is not shown in the function design.

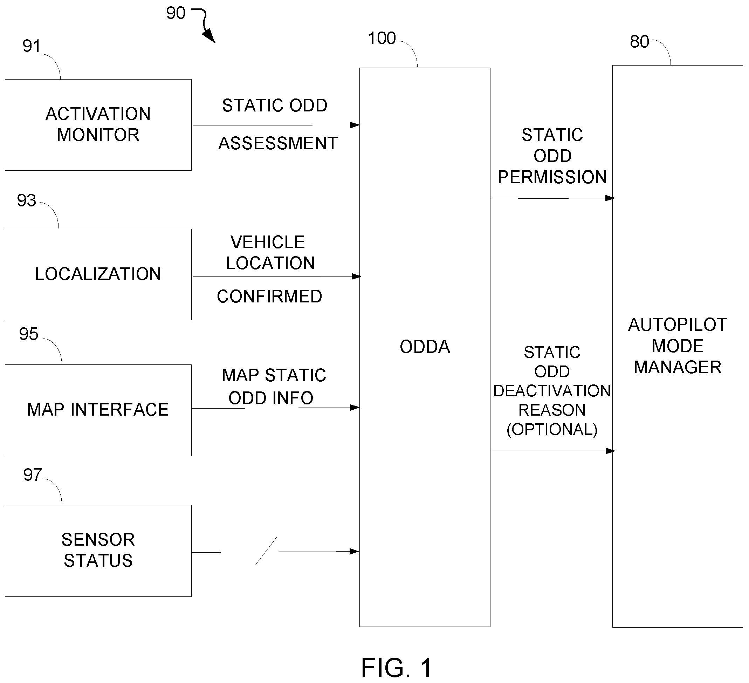

Referring to FIG. 1, a block diagram illustrating an advanced driver-assistance systems (ADAS) feature activation control system in accordance with an embodiment of the invention is shown. In an example, an apparatus (or system) 90 may implement an advanced driver-assistance systems (ADAS) feature activation control system in accordance with an embodiment of the invention. In an example, the system 90 may comprise a block (or circuit) 80, a block (or circuit) 91, a block (or circuit) 93, a block (or circuit) 95, a block (or circuit) 97, and a block (or circuit) 100. The circuit 100 may implement an operational design domain aggregator (ODDA) in accordance with an embodiment of the invention.

The circuit 91 may implement an activation monitor. The circuit 91 may be configured to generate a signal (e.g., STATIC ODD ASSESSMENT). The signal STATIC ODD ASSESSMENT may be configured to communicate results of a static operational design domain (ODD) assessment performed by the circuit 91. The signal STATIC ODD ASSESSMENT may be presented to a first input of the ODDA 100. The circuit 91 generally consumes information from both a primary information channel and a secondary information channel to assess static ODD conditions in real time. The static ODD assessment by the circuit 91 is generally reported to the ODDA 100.

The circuit 93 may implement a localization circuit. The circuit 93 may be configured to generate a signal (e.g., VEHICLE LOCATION CONFIRMED). The signal VEHICLE LOCATION CONFIRMED may be configured to communicate results of a localization process performed by the circuit 93. The signal VEHICLE LOCATION CONFIRMED may be presented to a second input of the ODDA 100. The circuit 93 generally consumes information from both the primary information channel and the secondary information channel to confirm the vehicle location in real time. The circuit 93 reports the confirmed localization to ODDA 100.

The circuit 95 may implement a map interface. The circuit 95 may be configured to generate a signal (e.g., MAP STATIC ODD INFO). The signal MAP STATIC ODD INFO may be configured to communicate ODD values determined for desired operational situations implemented based on data contained in an HD map. The signal MAP STATIC ODD INFO may be presented to a third input of the ODDA 100. The circuit 95 generally obtains map dat from the HD map based on a location of the vehicle reported by the circuit 93.

The circuit 97 may provide the status of various sensors. The circuit 97 may present a number of sensor status signals to a fourth input of the ODDA 100. In an example, the sensor status signals may report internal errors, signal availability, and/or signal confidence directly to the ODDA 100.

The circuit 80 may implement a feature mode manager. In an example, the circuit 80 may be configured to manage one or more ADAS automation features (or functions). In an example, the circuit 80 may implement an autopilot mode manager. In line with the invention, the circuit 80 is configured to control activation of the one or more ADAS automation features (or functions) based on a signal STATIC ODD PERMISSION. In some embodiments, the circuit 80 may also be configured to receive an optional signal STATIC ODD DEACTIVATION REASON from the ODDA 100.

In an example, the ODDA 100 may be implemented at automotive safety integrity level (ASIL) A. The ODDA 100 may be configured to generate the signals STATIC ODD PERMISSION and STATIC ODD DEACTIVATION REASON in response to the signal STATIC ODD ASSESSMENT, the signal VEHICLE LOCATION CONFIRMED, the signal MAP STATIC ODD INFO, and the sensor status signals 97. The ODDA 100 may present the signal STATIC ODD PERMISSION (and the signal STATIC ODD DEACTIVATION REASON when implemented) to an input of the circuit 80. When implemented at automotive safety integrity level (ASIL) A, the ODDA 100 generally ensures that the one or more features managed by the circuit 80 are active only when the static ODD conditions are met. In an example, the only functions in the ODD solution implemented at ASIL may include the circuit 80 and the ODDA 100. All other functions may be non-ASIL or quality management (QM). At any given time, the ODDA 100 may perform checks for the four following conditions:
1. the signal VEHICLE LOCALIZATION CONFIRMED reported by the circuit 93 is TRUE;
2. the signal STATIC ODD ASSESSMENT reported by the circuit 91 reports nominal values for the desired operational situations implemented;
3. the signal MAP STATIC ODD INFO reported by the circuit 95 reports nominal values for the desired operational situations implemented; and
4. the sensor status signals communicated via the circuit 97 do not report internal error, signal unavailability, or low signal confidence for any monitored sensors.
In an example, failure of any one of the above checks generally results in the ODDA 100 reporting Static ODD Permission as False. The ODDA 100 may also perform latent fault checks against the map, vision-based sensor(s), and radar-based sensors. In an example, the ODDA 100 may use the information obtained from the above checks for error reporting to a fault and diagnostic handling software function. The fault and diagnostic handling function is outside the scope of the invention and, therefore, is not shown in the function design.

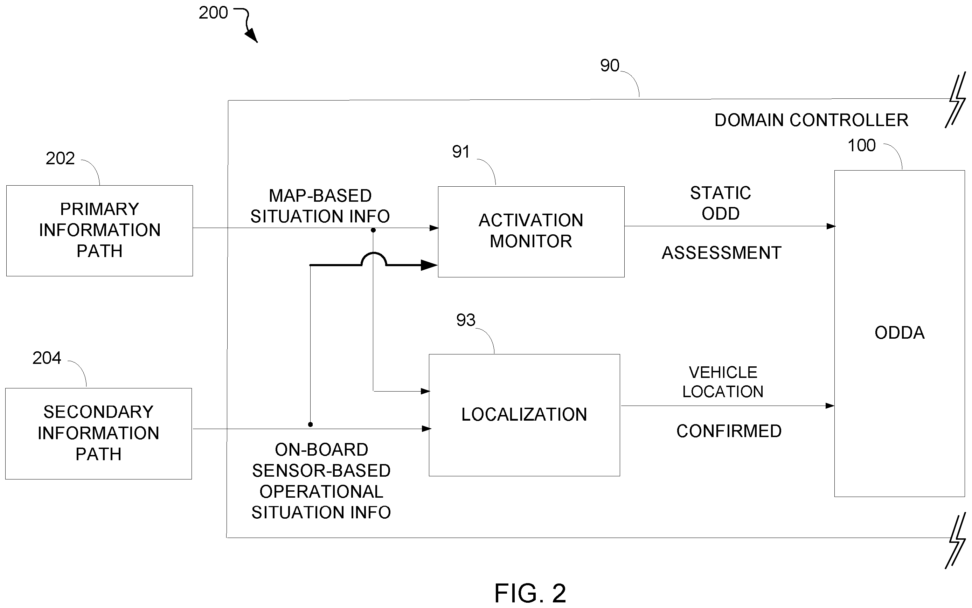

Referring to FIG. 2, a diagram is shown illustrating information paths (or channels) associated with an advanced driver-assistance systems (ADAS) feature activation control system in accordance with an embodiment of the invention is shown. In an example, information paths (or channels) 200 may present information about upcoming operational situations to the system 90. The information paths (or channels) 200 may comprise a primary information path (or channel) 202 and a secondary (or redundant) information path (or channel) 204. The primary information path 202 may present map-based operational situation information to a first input of the circuit 90. The secondary information path (or channel) 204 may present on-board sensor-based operational situation information to a second input of the circuit 90.

The primary information about upcoming operational situations that the system may not be able to handle safely generally comes from a digital map (or electronic horizon). Secondary and redundant information about upcoming operational situations generally comes from on-board sensors (e.g., front looking camera (FLC), front looking radar (FLR), and front corner/side radars (FCR/FSR or FCSR)). The secondary channel of information is generally able to identify upcoming unsafe operational situations that the primary channel is unable to identify and/or report. In addition, the secondary channel may be used to verify the presence of upcoming unsafe operational situations reported by the primary channel.

The map-based operational situation information obtained from the primary channel 202 and the on-board sensor-based operational situation information obtained from the secondary channel 204 may be presented to inputs of the activation monitor 91 and inputs of the localization circuit 93. The activation monitor 91 may be configured to generate the signal STATIC ODD ASSESSMENT in response to the map-based operational situation information and the on-board sensor-based operational situation information. The circuit 93 may be configured to generate the signal VEHICLE LOCATION CONFIRMED in response to the map-based operational situation information and the on-board sensor-based operational situation information.

The primary channel 202 generally uses digital maps to identify upcoming operational situations that are judged to be unsafe. In an example, the unsafe operational situations may include, but are not limited to, (i) lack of median barrier to oncoming traffic, (ii) lack of guardrail to prevent going off-road, (iii) presence of an intersection, (iv) presence of a road legally accessible to vulnerable road users (VRUs), and (v) presence of tollbooths and/or border stations. The term VRUs may be used to identify a category of road users including, but not limited to, pedestrians, bicyclists, etc. In an example, a high-definition (HD) map of unknown quality may reside on a memory unit in a vehicle. Satellite-based and potentially inaccurate positioning is generally used to query the on-board HD map to identify the upcoming travel environment (horizon). The potentially inaccurate HD map horizon is generally made available via the map interface 95 to the activation monitor 91 for processing.

The secondary channel 204 generally uses on-board sensors (e.g., the FLC, FLR, and FCSR) to determine in real time whether the upcoming operational situation is safe. Static perception, which fuses the information from the FLC and FLR sensors to report on the presence of various static and dynamic objects to the activation monitor 91, is generally part of the secondary channel 204. The activation monitor 91 generally consumes information from both the primary channel and the secondary channel to assess the static ODD conditions in real time. The static ODD assessment generated by the activation monitor 91 is generally reported to the ODDA 100. The FLC and FLR sensors may also report internal error, signal availability, and signal confidence directly to the ODDA 100. The localization module 93 also consumes information from both the primary and secondary channels to confirm the location of the vehicle in real time. The localization module 93 generally reports whether the localization of the vehicle is confirmed to the ODDA 100.

The secondary channel uses the FLC sensor, FLR sensor, and FCSR sensors to determine in real time whether the upcoming operational situation is safe. Static perception is part of the secondary channel and it fuses the information from the FLC sensor and the FLR sensor to report on the presence of various static and dynamic objects to the activation monitor 91. The FLC sensor and the FLR sensor also report internal error, signal availability, and signal confidence directly to the ODDA 100.

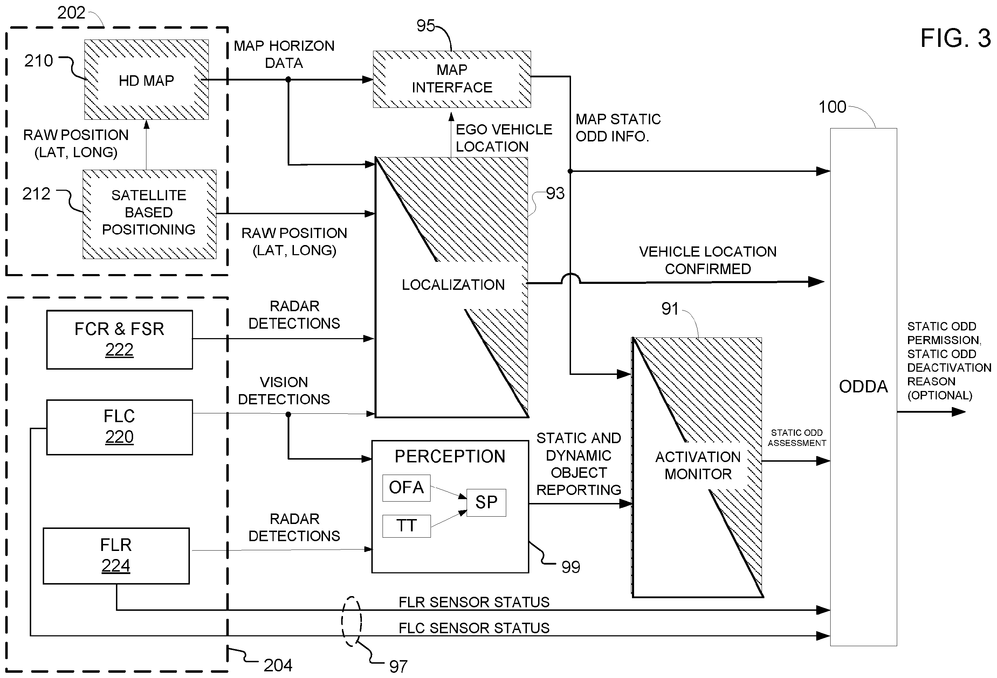

Referring to FIG. 3, a diagram illustrating map-based and on-board sensor-based information paths of an advanced driver-assistance systems (ADAS) feature activation control system in accordance with an embodiment of the invention is shown. In an example, the primary information path (or channel) 202 may comprise a block (or circuit) 210 and a block (or circuit) 212. The circuit 210 may implement a high-definition (HD) digital map. The circuit 212 may implement satellite-based positioning. In an example, the circuit 212 may comprise a global positioning system (GPS) or global navigation satellite system (GNSS) receiver. The circuit 212 may be configured to determined a position of a vehicle based on satellite signals received.

The circuit 210 may have an input that may receive raw position information (e.g., latitude, longitude, etc.) from the satellite-based positioning circuit 212. In response to the raw position data, the circuit 210 may be configured to present map horizon data to an input of the localization circuit 93 and an input of the map interface circuit 95. The circuit 212 may be configured to also present the raw position data to the localization circuit 93. The localization circuit 93 may be configured to present vehicle location information to the map interface circuit 95. The map interface circuit 95 may be configured to generate map-based static ODD information in response to the map horizon data received from the HD map 210 and the vehicle location information received from the localization circuit 93. The map interface circuit 95 may be configured to present the map-based static ODD information to an input of the activation monitor 91 and an input of the ODDA 100. The circuits 95, 210, and 212 are shaded to indicate a form/function that is used in the primary information path. The circuit 91 and 93 are partially shaded to indicate a form/function that is used in both the primary information path and the secondary information path.

The secondary information path (or channel) 204 may comprise a number of on-board sensors of the vehicle. The number of on-board sensors may include, but is not limited to, a forward looking camera (FLC) 220, front corner/side radar (FCR & FSR or FCSR) 222, and forward looking radar (FLR) 224. The forward looking camera (FLC) 220 may present a signal (e.g., VISION DETECTIONS) communicating vision detections to an input of the localization circuit 93. The forward looking camera (FLC) 220 may also present the signal VISION DETECTIONS communicating vision detections to an input of a perception module (or circuit) 99. The front corner/side radar (FCSR) 222 may present a signal (e.g., RADAR DETECTIONS) communicating radar detections to an input of the circuit 93 . The forward looking radar (FLR) 224 may present a signal communicating radar detections to a second input of the perception module 99. The localization circuit 93 may be configured to generate the vehicle location information presented to the map interface 95 and the signal VEHICLE LOCATION CONFIRMED in response to the raw position data received from the satellite- based positioning circuit 212, the map horizon data received from the HD map 210, the vision detections received from the FLC 220, and the radar detections received from the FCSR 222. The localization circuit 93 may be configured to present the signal VEHICLE LOCATION CONFIRMED to an input of the ODDA 100.

The perception module 99 may be configured to generate signals communicating static and dynamic object reporting in response to the vision detections from the forward looking camera (FLC) 220 and the radar detections from the forward looking radar (FLR) 224. The static and dynamic object reporting signals generated by the perception module 99 may be presented to an input of the activation monitor 91. The activation monitor 91 may be configured to generate the signal STATIC ODD ASSESSMENT in response to the static and dynamic object reporting signals received from the static perception module of the perception module 99 and the map static ODD information received from the map interface 95. The activation monitor 91 may be configured to present the signal STATIC ODD ASSESSMENT to an input of the ODDA 100.

In an example, the perception module 99 may be implemented as a software component. In an example, the perception module 99 may be utilized in a SAE L2+ automation feature such as Hyper Traffic Jam Assistance (HTJA). In various embodiments, the perception module 99 may utilize image data from the FLC 220 and point cloud data from the FCSRs 222a-222b and FLR 224 to (i) detect the presence of barriers, intersections, VRUs, tollbooths, and border stations, and (ii) analyze oncoming traffic, which may be further utilized by the activation monitor 91 to deactivate the automation feature (e.g., HTJA, etc.) as defined by the safety goals. The perception module 99 generally performs sensor fusion of the on-board sensors as part of the secondary channel. The perception module 99 generally fuses the image data from the FLC 220 and the point cloud data from the FCSRs 222a-222b and FLR 224 to (i) detect the presence of barriers, intersections, VRUs, tollbooths, and border stations, (ii) track objects (or targets) in the environment around the vehicle, and (iii) analyze oncoming traffic.

In an example, the perception module 99 may detect objects in the surrounding environment of the vehicle based on the on-board sensor data. In an example, the objects detected by the perception module 99 may be used as a cross-check on objects identified in the map data. For example, the map data may describe roadways and segments thereof and may also describe buildings and other items or objects (e.g., lampposts, crosswalks, curbs, etc.), location and directions of traffic lanes or lane segments (e.g., the location and direction of a parking lane, a turning lane, a bicycle lane, or other lanes within a particular roadway), traffic control data (e.g., the location and instructions of signage, traffic lights, or other traffic control devices), and/or any other map data that provides information to assist the ADAS system 90 in comprehending and perceiving the surrounding environment of the vehicle.

In an example, the perception module 99 may be configured to determine a state for one or more of the objects in the surrounding environment of the vehicle. In an example, the state generally describes a current state (or features) of the one or more objects. In an example, the state for each object may describe an estimate of a current location (or position) of each object, a current speed (or velocity) of each object, a current acceleration of each object, a current heading of each object, a current orientation of each object, a size/shape/footprint (e.g., as represented by a bounding shape such as a bounding polygon or polyhedron) of each object, a type/class (e.g., vehicle, pedestrian, bicycle, etc.), a yaw rate of each object, a distance from the vehicle of each object, a minimum path to interaction of each object with the vehicle, a minimum time duration to interaction of each object with the vehicle, and/or other state information. In another example, the perception module 99 may also be configured to detect object free areas (e.g., as represented by a bounding shape such as a bounding polygon or polyhedron). In another example, the perception module 99 may be configured to update state information for each object over time. Thus, the perception module 99 may detect and track objects, such as other vehicles, that are near the ego vehicle over time.

In an example, the perception module 99 may comprise a number of modules including, but not limited to, an object free area (OFA) module (or circuit), a target tracking (TT) module (or circuit), and a static perception (SP) module (or circuit). In another example, the perception module 99 may also comprise road estimation and electronic horizon reconstruction modules (not shown), which may be used to produce self-generated map information from the on-board sensor-based information. In an example, the object free area module may be configured to detect object free areas. In an example, the object free area module may have a polygon output that may present a bounding shape such as a bounding polygon or polyhedron representing each object free area. In an example, the target tracking module may be configured to detect and track objects, such as other vehicles, that are near the ego vehicle over time. The target tracking module may have an output that may present a target tracking output. In an example, the polygon output of the OFA module and the target tracking output of the target tracking module may be presented to inputs of the static perception module. The static perception module may be configured to generate the static and dynamic object reporting signals that are presented to the ODDA 100 in response to the polygon output received from the OFA module and the target tracking output received from the target tracking module.

For motion assessment, the static perception module may use object information from the target tracking output of the target tracking module combined with analysis of the object free area (OFA) polygon output of the OFA module in order to provide the direction of the traffic and a confidence of the detection. For detecting intersections, VRU's, tollbooths, and border stations, the static perception module generally utilizes the object information from the target tracking output combined with analysis of the OFA polygon output to provide intersection type, VRU type, VRU location, tollbooth location, border station location, and intersection/VRU/tollbooth/border station confidence. For barrier detection, the static perception module may utilize a barrier output using radar measurements from the target tracking module combined with road edge and static objects information from the FLC 220 to provide barrier segment data as an output that includes location of the segments, number of segments, and confidence.

The ODDA 100 may also receive sensor status signals from the forward looking camera (FLC) 220 and the forward looking radar (FLR) 224. The ODDA 100 is generally configured to generate the signals STATIC ODD PERMISSION and, optionally, STATIC ODD DEACTIVATION REASON in response to the map-based static ODD information, the signal VEHICLE LOCATION CONFIRMED, the signal STATIC ODD ASSESSMENT, and the sensor status signals.

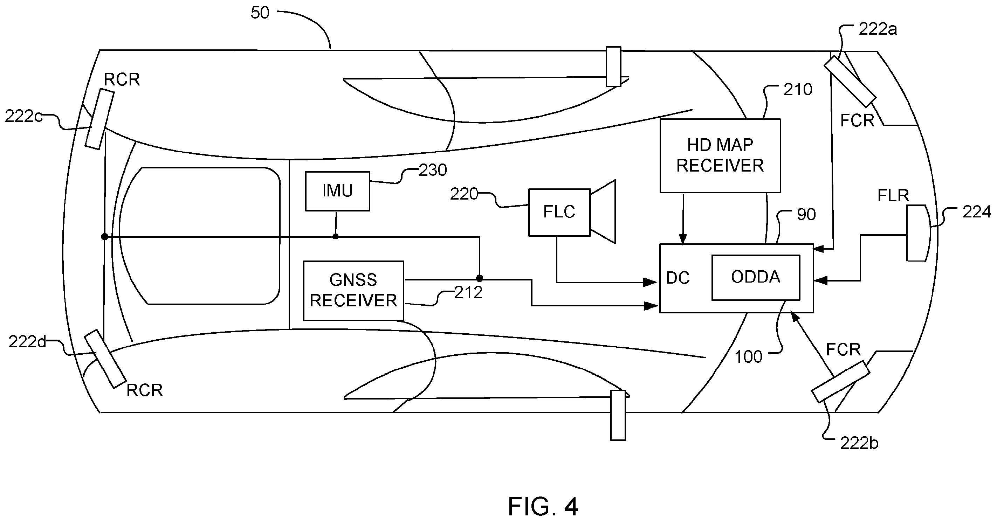

Referring to FIG. 4, a diagram illustrating an implementation of the apparatus 90 is shown in accordance with an example embodiment of the invention. In an example, the apparatus (or system) 90 may be mounted totally within, or at least partially within a vehicle 50. In an example, the apparatus 90 may be implemented as a domain controller (DC). In another example, the apparatus 90 may be implemented as an active safety domain master (ASDM). In various embodiments, the operational design domain aggregator (ODDA) 100 may be implemented within the domain controller or active safety domain master of the vehicle 50. The vehicle 50 may include a high-definition (HD) map receiver 210, a global navigation satellite system (GNSS) receiver 212, a forward looking camera (FLC) 220, a number of front corner/side radar (FCSR) sensors 222a-222b, a number of rear corner/side radar (RCSR) sensors 222c-222d, a forward looking radar (FLR) sensor 224, and an inertial measurement unit (IMU) 230. In some embodiments, the vehicle 50 may also include LIDAR sensors and/or sonar (ultrasonic) sensors (not shown).

The forward looking camera (FLC) 220 is generally used to detect and identify objects and road features in front of the vehicle 50. In an example, the forward looking camera (FLC) 220 may be configured to provide stereoscopic vision with a 100-degree field of view (FOV). In an example, the forward looking camera (FLC) 220 may be used to detect road markings (e.g., lane markings, etc.), road signs, traffic lights, structures, etc. The corner/side radar sensors 222a-222d and the forward looking radar (FLR) sensor 224 (and LIDAR and/or sonar sensors when present) are generally used to detect and track objects. In an example, each of the corner/side radar sensors 222a-222d may have a 140-degree FOV. In an example, the forward looking radar (FLR) sensor 224 may have two FOVs, an 18-degree FOV for long range sensing and a 90-degree FOV for short range sensing. The IMU 230 generally reports the orientation, angular velocity and acceleration, and forces acting on the vehicle 50.

In an example, the HD map receiver 210, the GNSS receiver 212, the FLC 220, the FCSRs 222a-222b, the RCSRs 222c-222d, the FLR 224, and the IMU 230 may be connected to the system 90. In an example, the HD map receiver 210, the GNSS receiver 212, the FLC 220, the FCSRs 222a-222b, the RCSRs 222c-222d, the FLR 224, and the IMU 230 may be connected to the system 90 via one or more vehicle buses of the vehicle 50. In another example, the HD map receiver 210, the GNSS receiver 212, the FLC 220, the FCSRs 222a-222b, the RCSRs 222c-222d, the FLR 224, and the IMU 230 may be connected to the system 90 via a wireless protocol. In an example, the FLC 220 may convey surrounding road information (e.g., lane widths, marker types, lane marker crossing indications, and video) to the system 90. The GNSS receiver 212 may convey position data (e.g., latitude value, longitude value, adjustment information and confidence information) to the system 90. The HD map receiver 210 may transfer map data to the system 90.

The FLC 220 may implement an optical sensor. In various embodiments, the FLC 220 may be an optical camera. The FLC 220 is generally operational to provide the surrounding road information (or image data) to the system 90. The road information may include, but is not limited to, lane width data, marker type data, lane change indicators, and video of a roadway ahead of the vehicle 50 within the field of view of the FLC 220. In various embodiments, the FLC 220 may be a color camera. The color may be useful for distinguishing between solid-yellow lane markers (e.g., leftmost lane markers) from solid-white lane markers (e.g., rightmost lane markers). In various embodiments, the FLC 220 may provide an estimated lane width for at least a current lane in the center of the field of view of the FLC 220. In some embodiments, the FLC 220 may provide estimated lane widths for the lane(s) neighboring the center lane. In other embodiments, the FLC 220 may provide estimated lane widths for all of the lanes within the field of view of the FLC 220. The lane widths may be determined using standard image recognition methods and standard analysis methods implemented in the FLC 220. The FLC 220 may also identify all lane markers within the field of view of the FLC 220. When the FLC 220 crosses over a lane marker, the FLC 220 may notify the system 90 that a lane change is occurring. Identification of the lane markers and the lane changes may be determined using standard image recognition methods and standard analysis methods implemented in the FLC 220. The FLC 220 may transfer the road information to the system 90 via a vehicle bus or a wireless protocol.

One or more other types of sensors may be used in conjunction with the FLC 220. Example sensors may include, but are not limited to, radar sensors, light detection and ranging (LiDAR) sensors, inertial sensors, thermal imaging sensors, and/or acoustic sensors. Some of the sensors may detect objects on the side of the road to provide estimations of a left boundary and a right boundary of the road. From the left boundary and the right boundary, a width of the road may be calculated. From the calculated width, an estimation of how may lanes probably fit within the width may be made based on a standard lane width. Thereafter, the sensors may estimate the current lane that the vehicle 50 occupies based on the relative distances of the sensors on the vehicle 50 to the left boundary and the right boundary of the road and the estimated number of lanes. Lane crossovers may be determined by the sensors based on the estimated numbers of lanes and changes in the relative distances to the left boundary and/or the right boundary.

The system 90 may implement a control circuit (e.g., an electronic control unit). The system 90 is generally operational to keep track of the current lane that the vehicle occupies and correct the current position of the vehicle 50 to a center of the current lane. The tracking may be based on the map data received from the HD map receiver 210, the satellite position data received in the GNSS receiver 212, the road information received in the vision detections from the FLC 220, the radar detections received from the FCSRs 222a-222b and the FLR 224, and the vehicle orientation and forces received from the IMU 230. The satellite position data may include an adjustment value and a corresponding confidence value.

The HD map receiver 210 may implement a radio-frequency receiver. The HD map receiver 210 may be operational to receive the map data from an antenna (not shown). The map data may be converted to a digital form and presented to the system 90.

The GNSS receiver 212 may implement a satellite- navigation device. In various embodiments, the GNSS receiver 212 may include a Global Positioning System (GPS) receiver. Other types of satellite-navigation devices may be implemented to meet the design criteria of a particular application. The GNSS receiver 212 is generally operational to provide the latitude data and the longitude data of the vehicle 50 based on the GNSS signals received from a number of satellites. The GNSS receiver 212 may also be operational to adjust the latitude data and the longitude data based on the adjustment value and a corresponding confidence value received from the system 90. The confidence value may have a range from zero (e.g., unreliable) to one (e.g., reliable). If the confidence value is above a high threshold (e.g., >0.7), the GNSS receiver 212 may correct the latitude data and the longitude data per the adjustment value. If the confidence value is below a low threshold (e.g., <0.3), the GNSS receiver 212 may ignore the adjustment value. If the confidence value is between the high threshold and the low threshold, the GNSS receiver 212 may apply a correction to both the latitude data and the longitude data that is a linear weighting based on the degree of confidence.

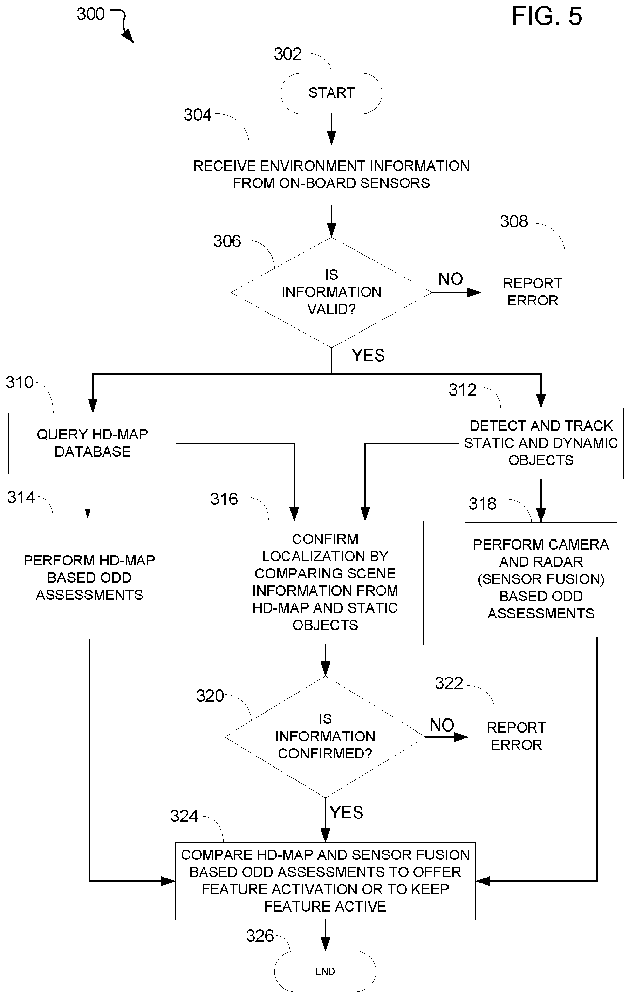

Referring to FIG. 5, a flow diagram is shown illustrating a method for determining whether to offer or maintain ADAS feature activation in accordance with an embodiment of the invention. In an example, a method (or process) 300 may be implemented to determine whether to offer or maintain ADAS feature activation in accordance with an embodiment of the invention. In an example, the method 300 may comprise a step (or state) 302, a step (or state) 304, a decision step (or state) 306, a step (or state) 308, a step (or state) 310, a step (or state) 312, a step (or state) 314, a step (or state) 316, a step (or state) 318, a decision step (or state) 320, a step (or state) 322, a step (or state) 324, and a step (or state) 326.

The process 300 generally starts in the step 302 and moves to the step 304. In the step 304, the process 300 may receive environment information from on-board sensors of the vehicle and determine whether the sensor data is valid. The process 300 may then move to the decision step 306. In the decision step 306, the process 300 determines whether the information received from the on-board sensors is valid. In an example, sensor status signals may be checked to determine whether the sensors are operating properly. When the sensor information is determined to be not valid, the process 300 may move to the step 308 and report an error. When the sensor information received from the on-board sensors is determined to be valid, the process 300 may begin processing the step 310 and the step 312. The steps 310 and 312 may be performed concurrently.

In the step 310, the process 300 may query the high-definition (HD) map database. In the step 312, the process 300 may detect and track static and dynamic objects using image data from the FLC 220 and point cloud data from the FCSRs 222a-222b and the FLR 224. The process 300 may then begin processing in the steps 314, 316, and 318. The processing performed in the steps 314, 316, and 318 may be performed concurrently. In the step 314, the process 300 may perform high definition map-based operational design domain assessments. In the step 316, the process 300 may confirm localization by comparing scene information from the high definition map and static objects detected using the on-board sensors in the step 312. In the step 318, the process 300 may perform camera and radar sensor fusion operations and perform sensor-based operational design domain assessments.

When the process 300 has confirmed localization in the step 316, the process 300 may move to the decision step 320. In the decision step 320, the process 300 may determine whether the localization has been confirmed. When the localization is not confirmed, the process 300 may move to the step 322 and report an error. In an example, the localization may not be confirmed when the static objects detected by the on-board sensors do not agree with the information retrieved from the high definition map. When localization is confirmed, the process 300 may move to the step 324. In the step 324, the process 300 may take results from the steps 314 and 318 to determine whether or not to offer feature activation or whether or not to keep a feature active. In an example, the process 300 may compare the HD map-based and on-board- sensor-based operational design domain assessments to determine whether or not to offer feature activation or whether or not to keep a feature active. When the process 300 has finished determining whether to offer feature activation or to keep the feature active, the process 300 may move to the step through 326 and terminate.

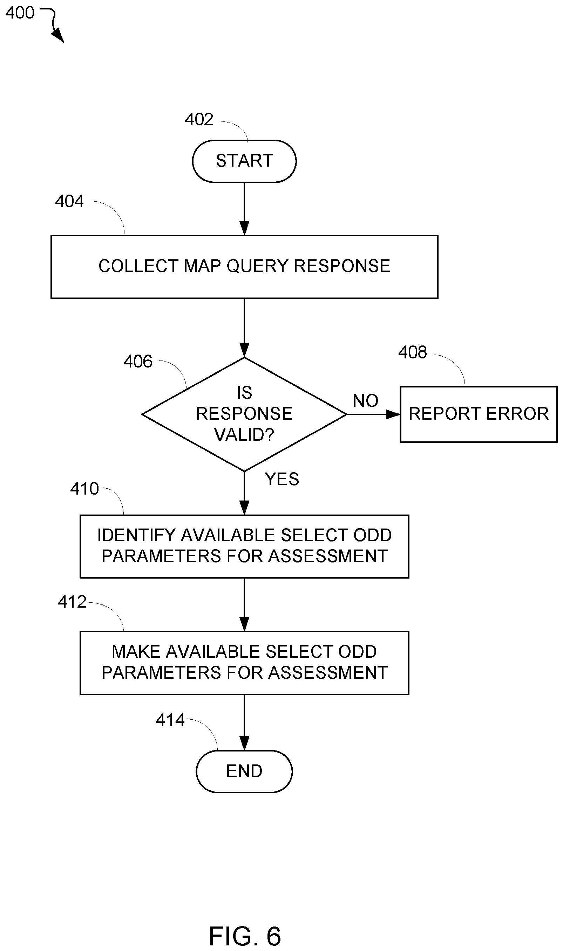

Referring to FIG. 6, a flow diagram is shown illustrating a method of determining map-based ODD assessments in accordance with an embodiment of the invention. In an example, a method (or process) 400 may be implemented to determine map-based ODD assessments in accordance with an embodiment of the invention. In an example, the step 314 in FIG. 5 may be implemented using the process 400. In an example, the process 400 make comprise a step (or state) 402, a step (or state) 404, a decision step (or state) 406, a step (or state) 408, a step (or state) 410, a decision step (or state) 412, and a step (or state) 414. The process 400 generally begins in the step 402 and moves to the step 404.

In the step 404, the process 400 may collect a map query response. In the decision step 406, the process 400 determines whether the response is valid. In an example, the process 400 may check whether the map interface 95 has indicated any errors. In another example, the process 400 may check for agreement between the map data and on-board sensor data. When the response is not valid, the process 400 may move to the step 408 and report an error. When the response is valid, the process 400 may move to the step for 410.

In the step 410, the process 400 may identify select ODD parameters for assessment, then move to the step 412. In the step 412, the process 400 may make the select ODD parameters available for assessment. The process 400 may then move to the step 414 and terminate.

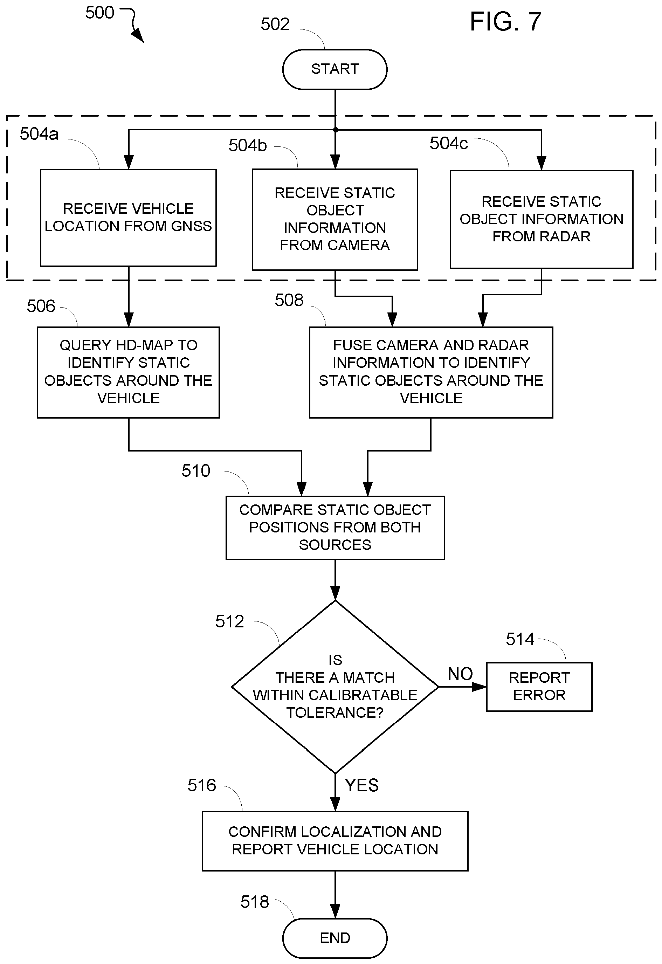

Referring to FIG. 7, a flow diagram is shown illustrating a method of confirming localization in accordance with an embodiment of the invention. In an example, a method (or process) 500 may be implemented to confirm localization of the vehicle in accordance with an embodiment of the invention. In an example, the step 316 in FIG. 5 may be implemented using the process 500. In an example, the process 500 may comprise a step (or state) 502, a step (or state) 504, a step (or state) 506, a step (or state) 508, a step (or state) 510, a decision step (or state) 512, a step (or state) 514, a step (or state) 516, and a step (or state) 518. The process 500 generally begins in the step 502 and moves to the step 504.

In the step 504, the process 500 may obtain information for confirming the location of the vehicle. In an example, the step 504 may comprise multiple steps 504a-504c, which may be performed concurrently (in parallel or simultaneously). In the step 504a, the process 500 may receive vehicle location information from the satellite-based positioning block 212. In the step 504b, the process 500 may receive static object information from the FLC 220. In the step 504c, the process 500 may receive static object information from the FCSRs 222a-222b and the FLR 224. When the information has been received, the process 500 may move to the steps 506 and 508, which may be performed concurrently (in parallel or simultaneously).

In the step 506, the process 500 may query the HD map 210 to identify static objects around the vehicle at the location indicated by the satellite-based position information received in step 504a. In the step 508, the process 500 may fuse the camera and radar information received in the steps 504b and 504c, respectively, to identify static objects around the vehicle. The process 500 may then move to the step 510. In the step 510, the process 500 may compare the static objects identified by the HD map 210 with the static objects identified using the camera and radar information, and move to the step 512.

In the step 512, the process 500 may determine whether there is a match between the static objects identified by the HD map 210 and the static objects identified using the camera and radar information. In an example, the process 500 may utilize a calibratable (or programmable) tolerance (or threshold) to determine a quality of the match. When a match is not found (e.g., within the calibratable tolerance), the process 500 may move to the step 514 and report an error. When a match is found (e.g., within the calibratable tolerance), the process 500 may move to the step 516. In the step 516, the process 500 may confirm localization (e.g., set the signal VEHICLE LOCATION CONFIRMED to TRUE) and report the location (e.g., latitude, longitude, etc.) of the vehicle. The process 500 may then move to the step 518 and terminate.

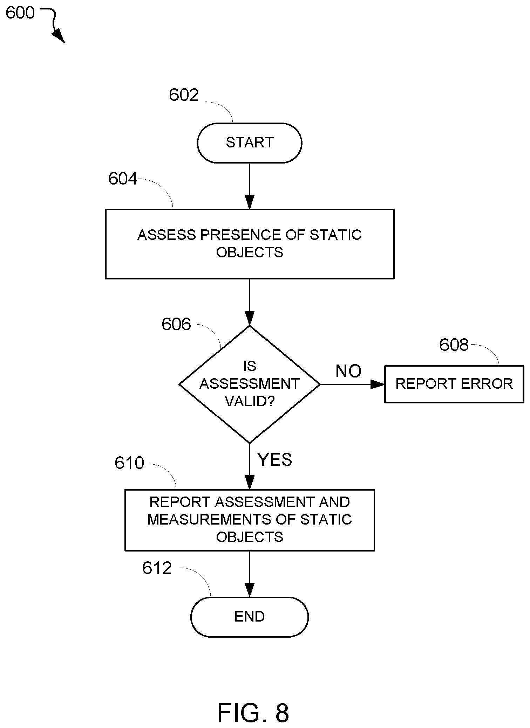

Referring to FIG. 8, a flow diagram is shown illustrating a method of determining sensor-based ODD assessments in accordance with an embodiment of the invention. In an example, a method (or process) 600 may be implemented to determine sensor-based ODD assessments in accordance with an embodiment of the invention. In an example, the step 318 in FIG. 5 may be implemented using the process 600. In an example, the method 600 may comprise a step (or state) 602, a step (or state) 604, a decision step (or state) 606, a step (or state) 608, a step (or state) 610, and a step (or state) 612. The process 600 generally begins in the step 602 and moves to the step 604.

In the step 604, the process 600 may fuse camera and radar information to identify static objects around the vehicle and assess an effect the presence or absence of static objects detected has on the operational design domain. In the decision step 606, the process 600 determines whether the assessment is valid. For example, the process 600 may check whether the camera and/or radar sensors reported an internal error, or check the signal availability and/or signal confidence reported. When the assessment is not valid, the process 600 may move to the step 608 and report an error. When the assessment is valid, the process 600 may move to the step 610. In the step 610, the process 600 may report the ODD assessment and measurements of the static objects from the perception module 99 to the activation monitor 91. The process 600 may then move to the step 612 and terminate.

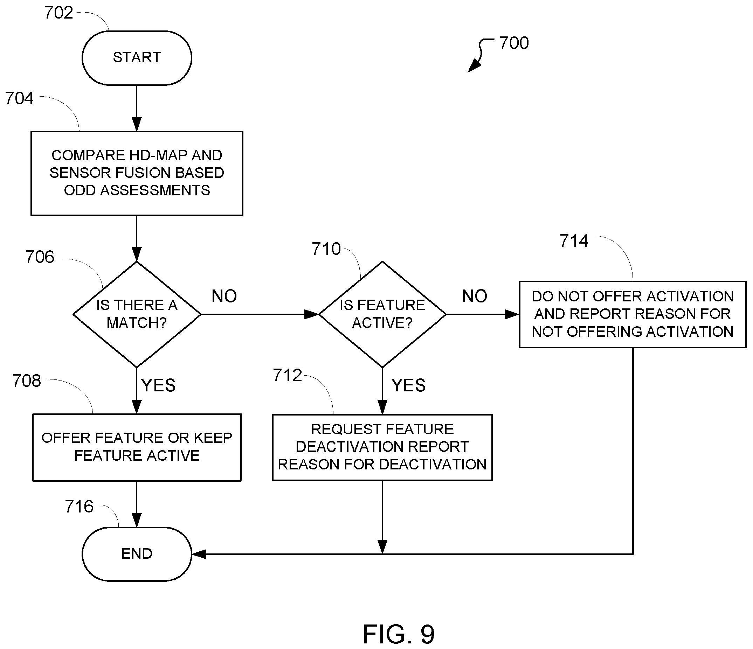

Referring to FIG. 9, a flow diagram is shown illustrating a method a method of comparing map-based and sensor-based ODD assessments to determine whether to offer or maintain ADAS feature activation in accordance with an embodiment of the invention. In an example, a method (or process) 700 may be implemented to determine whether to offer or maintain ADAS feature activation in accordance with an embodiment of the invention. In an example, the step 324 in FIG. 5 may be implemented using the process 700. In an example, the process 700 make comprise a step (or state) 702, a step (or state) 704, a decision step (or state) 706, a step (or state) 708, a decision step (or state) 710, a step (or state) 712, a step (or state) 714, and a step (or state) 716. The process 700 generally begins in the step 702 and moves to the step 704. In the step 704, the process 700 may compare the HD map based ODD assessment and the sensor fusion based ODD assessment. In an example, a highway environment may be considered safe for hands-free driving, while an urban environment may be considered unsafe for hands-free driving. In the decision step 706, the process 700 determines whether the ODD assessments based on the HD map information and the sensor fusion information match. When the ODD assessments match, the process 700 may move to the step 708, to report that the ADAS feature activation may be offered or maintained. When the ODD assessments do not match, the process 700 may move to the decision step for 710.

In the decision step 710, the process 700 may determine whether the ADAS feature is active. When the ADAS feature is active, the process 700 may move to the step 712 to request deactivation of the ADAS feature and report a reason for deactivation. When the ADAS feature is not active, the process 700 may move to the step 714 to request the ADAS feature not be offered and report a reason for not offering activation of the ADAS feature. The process 700 may then move from either the steps 708, 712, and 714 to the step 716 and terminate.

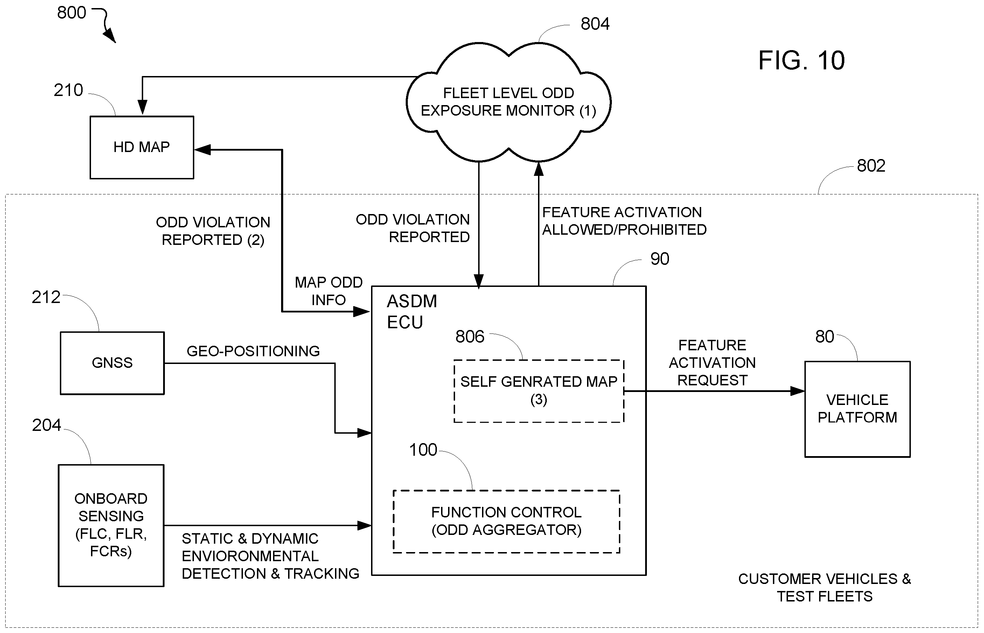

Referring to FIG. 10, a diagram is shown illustrating example applications utilizing an operational design domain aggregator (ODDA) in accordance with an embodiment of the invention. In an example, a safety concept 800 is shown comprising a vehicle safety system 802 and an fleet level ODD exposure monitor 804. In various embodiments, the safety concept 800 in accordance with an embodiment of the invention may include: (1) fleet level ODD monitoring of exposure to ODD violating elements via on-board sensors in customer fleets & test vehicles; (2) providing ODD violations detected by on-board sensing as feedback to HD map suppliers; (3) producing a self-generated map using on-board sensors in places with no, or limited, HD map availability, and (4) allowing/prohibiting feature activation based on the fleet level ODD monitoring. In an example, each of the extensions or a combination thereof may be implemented to incrementally expand feature availability using ODD evaluation in accordance with an embodiment of the invention.

In an example, an approach may start small with respect to a feature set and expand the ODD strategy incrementally over time with confidence (data). In an example, the vehicle safety system 802 including an operational design domain aggregator (ODDA) 100 in accordance with an embodiment of the invention may rely on monitoring the ODD strategy at fleet level using on-board sensing and verifying the ODD strategy in real time. The ODD monitor 804 may reside at a central location (e.g., cloud, vehicle manufacturer, etc.). The ODD monitor 804 may verify information about ODD violations in real time against an exposure threshold determined at design time (e.g., quantitative target determined based on an accident database, field monitoring, etc.). When the ODDA 100 detects a change in reality (e.g., maps against on-board sensing, etc.), the ODDA 100 may feedback/update the HD map 210 in real time. In an example, the ODD monitor 804 may disable a feature across fleets when overall exposure crosses a threshold for each hazardous event. In an example, there may also be an option to share the vehicle-sourced map data with the rest of the fleet (e.g., over-the-air (OTA) broadcast, etc.). Hence, exposure reduction at fleet level may become ASIL (safety critical) compliant.

The system 802 may include the HD map 210, the global navigation satellite system (GNSS) receiver 212, the on-board sensing functions 204, the operational design domain aggregator (ODDA) 100, and the feature controller of the vehicle platform 80. In an example the HD map 210 may present information to an input of the ODDA 100. The satellite-based positioning block 212 may present geo-positioning information to another input of the ODDA 100. Static and dynamic environmental detection and tracking information from the camera and radar sensors of on-board sensing block 204 may be presented to a third input the ODDA 100. The ODDA 100 may present a feature activation request to the feature controller of the vehicle platform 80.

Customer vehicles and test fleets incorporating the vehicle safety system 802 may be configured to provide feedback to the central fleet level ODD exposure monitor 804. In an example, the ODDA 100 may receive feature activation configuration signals from the fleet level ODD exposure monitor 804. The feature activation signals may provide the ODDA 100 with particular features which are allowed to be activated or prohibited from being activated. The ODDA 100 may provide reporting of ODD violations to the fleet level ODD exposure monitor 804. In an example, the fleet level ODD exposure monitor 8 04 may provide feedback to the high definition map provider to update the HD map 210 based on the feedback from the ODDA 100. In another example, the ODDA 100 may update the HD map stored in the vehicle. In another example, the ODDA 100 may be configured to produce a self-generated map 806 using on-board sensors in places with limited or no HD map availability. In an example, the self-generated map 806 may be stored in memory of the ASDM ECU 90.

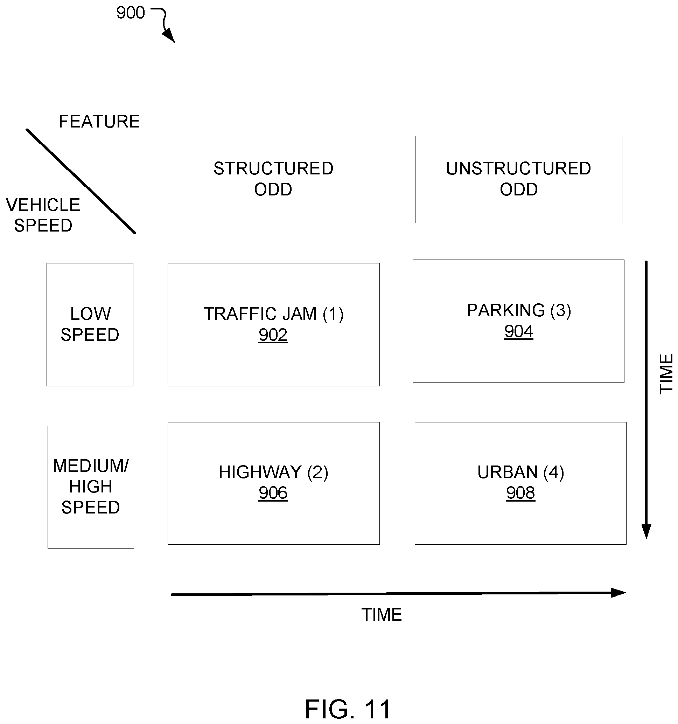

FIG. 11 is a diagram of a cruising features roadmap 900 is shown. In an example, the cruising features roadmap 900 illustrates a path through incremental operational design domain expansion using supervised (SAE L2+) driving as a precursor to unsupervised (autonomous) driving. The operating conditions under which a driving automation system or feature (e.g., adaptive cruise control, hyper traffic jam assistance, etc.) is specifically designed to function is generally referred to as the operational design domain (ODD). The ODD, which is a condition or conditions for allowing execution of the partially automated driving feature, is generally defined based on design intent and market needs. If a driving condition of the vehicle deviates from the ODD while a partially automated driving feature is activated, the driver is generally notified to take over operation of the vehicle and the partially automated driving feature may be deactivated after elapse of a predefined delay.

The ODD is generally specified to enable the safe deployment of automated driving systems. The operational design domain generally comprises the static and dynamic attributes within which an automated driving system is designed to function safely. The ODD generally includes, but is not limited to, environmental, geographical, and time-of-day restrictions, and/or the requisite presence or absence of certain traffic or roadway characteristics. In an example, environmental considerations may include, but are not limited to, weather, illumination, connectivity, etc. In an example, geographical considerations may include, but are not limited to, zones, drivable areas, intersections, structures near roads, fixed road structures, temporary road structures, etc. In an example, dynamic elements/considerations may include, but are not limited to, traffic, pedestrians, cyclists, speed, etc.

In an example, raw sensor data may comprise one or more of image data, speed data, and acceleration data from one or more on-board sensors. The image data may comprise images obtained from various cameras (e.g., forward looking camera, surround view cameras, etc.) on the vehicle. The speed and acceleration data may be obtained by tapping into a Controller Area Network (CAN) bus of the vehicle. In an example, object data may comprise one or more of position and/or type of surrounding objects, lane markings, traffic lights and/or signs, and road conditions. In an example, tactical information may comprise one or more of map (electronic horizon) information and high level navigation information. In an example, map information may comprise current traffic rules, road geometry, allowable speed, highway exits, roundabouts, distances to intersections, etc.

In an example, the cruising features roadmap 900 may be divided into a number of regions based on vehicle speed and advanced driver-assistance systems (ADAS) features/functions level. In an example, the cruising features roadmap 900 may be implemented as a grid with one axis representing vehicle speed and another axis representing feature level. In an example, the vehicle speed axis may be divided into two vehicle speed ranges (e.g., low speed and medium/high speed) and the feature level axis may be divided into two feature levels (e.g., Structured ODD and Unstructured ODD), producing four operational regions 902, 904, 906, and 908. In an example, the operational region 902 may represent features operating at low vehicle speed with structured ODD, the operational region 904 may represent features operating at low vehicle speed with unstructured ODD, the operational region 906 may represent features operating at medium-to-high vehicle speed with structured ODD, and the operational region 908 may represent features operating at medium-to-high vehicle speed with unstructured ODD. In an example, the region 902 may include a traffic jam assistance feature, the region 904 may include a parking assistance feature, the region 906 may include a feature such as autopilot for highway environments, and the region 908 may include an autopilot feature for urban environments.

In an example, the features operations may move from low speed to medium-to-high speed or from structured ODD to unstructured ODD over time (as indicated by the arrows labeled TIME). In each of the regions 902-908, the features may be introduced as hands on operation and transition over time to hands off operation. Similarly, the features may be introduced as hands on and low vehicle speed and/or structured ODD operation and transition over time to hands off and medium-to-high speed and/or unstructured ODD operation.

In an example, various advanced driver-assistance systems (ADAS) features/functions may transition from hands-on to hands-off in various applications over time. In an example, a structured operational design domain may be applied to functions utilized in low speed applications, such as in a traffic jam, and in medium/high speed application, such as highway driving. In an example, an unstructured operational design domain may be applied to functions utilized in low speed applications, such as parking, and in medium/high speed application, such as urban driving.

In an example, various advanced driver-assistance system features/functions may transition from hands-on to hands-off in various roll-out steps. In a first step occurring at design time, quantitative targets may be set for each hazardous event (e.g., exposure to pedestrians <1/100 hrs., etc). A second step may occur at run time, where on-board sensing at fleet level may be used to (i) detect loss of physical separation (vision/radar sensing), (ii) detect traffic lights (vision sensing), (iii) detect oncoming traffic (vision/radar sensing), and/or (iv) detect pedestrians (vision/radar sensing). In another step, the feedback from test fleets (both prior to and after launch) may be used to verify/update the quantitative targets, invalidate maps, etc.. In another example, a feature may be deployed in a "shadow mode" of a target ODD to evaluate effectiveness of the ODD safety concept to ensure exposure to critical situations for supervised driving is at acceptably low level. In the shadow mode, an ADAS feature may be operated in parallel with a human driver operating the vehicle, without being able to affect the operation of the vehicle. In yet another step, hands-off driving may be unlocked (relaxed ODD restrictions) for a new target ODD based on shadow mode data (e.g., actual exposure < target exposure). In still another example, probe-sourced data from on-board sensing may be fed back to improve and/or validate incoming HD map integrity in real time. In still another step, a hands-off driving feature may be locked via signal from the cloud, with the vehicle (or fleet) falling back to hands-on driving anytime an exposure to critical operational situation goes above a target risk threshold (e.g., actual exposure > target exposure). The various steps described above may be repeated to expand a capability of the hands-free feature (e.g., from 80 kph to 100 kph, etc.) and cover a new target deployment area over time (e.g., from highway to urban roads, etc.). Over time, a feature may be expanded to allow limited eyes-off driving (e.g., unsupervised ODD) based on evidence of low residual exposure to violating hazardous events in constrained ODD.

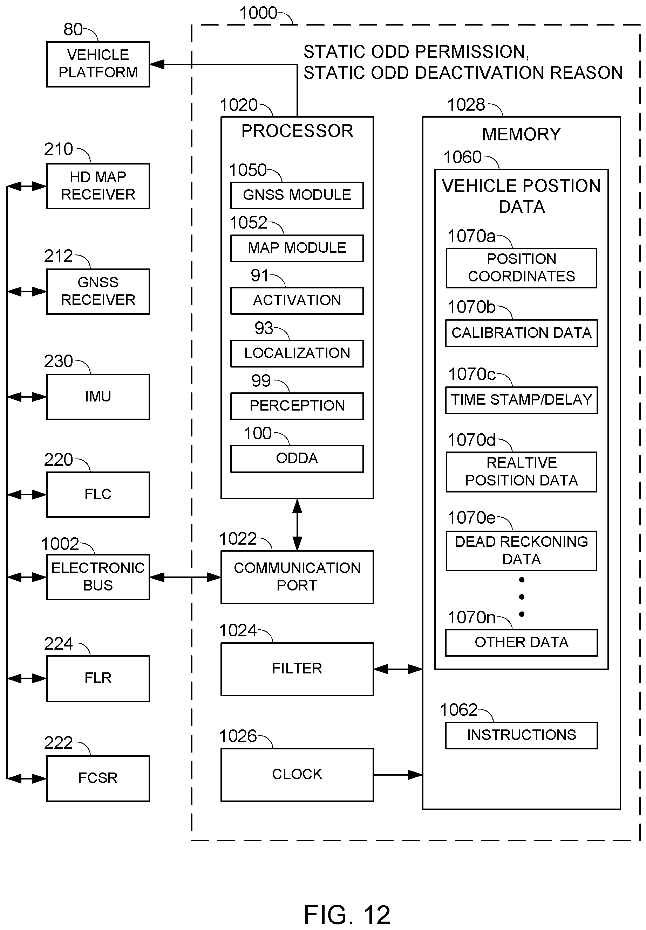

Referring to FIG. 12, a diagram illustrating an electronic control module implementing an advanced driver-assistance systems (ADAS) feature activation control system in accordance with an example embodiment of the invention is shown. In an example, an apparatus 1000 may implement an electronic control module (ECU). In an example, the electronic control module (ECU) 1000 may be implemented as a domain controller (DC). In another example, the ECU 1000 may be implemented as an active safety domain master (ASDM). In various embodiments, the ECU 1000 may be configured to control activation of one or more features (or functions) of an ADAS component of a vehicle. In various embodiments, the operational design domain aggregator (ODDA) 100 may be implemented within the ECU 1000. In an example, the ECU 1000 may be connected to the autopilot mode manager of the vehicle platform 80. In an example, the ECU 1000 may be configured to communicate the signals STATIC ODD PERMISSION and STATIC ODD DEACTIVATION REASON to the autopilot mode manager of the vehicle platform 80.

In an example, the ECU 1000 may be connected to a block (or circuit) 1002. The circuit 1002 may implement an electronic bus. The electronic bus 1002 may be configured to transfer data between the ECU 1000 and the HD map receiver 210, the GNSS receiver 212, the forward looking camera (FLC) 220, the front corner/side radar (FCSR) sensors 222, the forward looking radar (FLR) sensor 224, and/or the inertial measurement unit 230. In some embodiments, the electronic bus 1002 may be implemented as a vehicle Controller Area Network (CAN) bus. The electronic bus 1002 may be implemented as an electronic wired network and/or a wireless network. Generally, the electronic bus 1002 may connect one or more components of the vehicle 50 to enable a sharing of information in the form of digital signals (e.g., a serial bus, an electronic bus connected by wiring and/or interfaces, a wireless interface, etc.).

The ECU 1000 generally comprises a block (or circuit) 1020, a block (or circuit) 1022, a block (or circuit) 1024, a block (or circuit) 1026, and a block (or circuit) 1028. The circuit 1020 may implement a processor. The circuit 1022 may implement a communication port. The circuit 1024 may implement a filter. The circuit 1026 may implement a clock. The circuit 1028 may implement a memory. Other blocks (not shown) may be implemented (e.g., I/O ports, power connectors, interfaces, etc.). The number and/or types of circuits implemented by the module 1000 may be varied according to the design criteria of a particular implementation.

The processor 1020 may be implemented as a microcontroller. The processor 1020 may comprise a block (or circuit) 1050, a block (or circuit) 1052, a block (or circuit) implementing the activation monitor 91, a block (or circuit) implementing the localization module 93, a block (or circuit) implementing the perception module 99, and/or a block (or circuit) implementing the ODDA 100. The circuit 1050 may implement a GNSS module and/or chipset. The circuit 1052 may implement a map module. The processor 1020 may comprise other components (not shown). In some embodiments, the processor 1020 may be a combined (e.g., integrated) chipset implementing processing functionality, the GNSS chipset 1050, the map module 1052 and/or the ODDA 100. In some embodiments, the processor 1020 may be comprised of a number of separate circuits (e.g., the microcontroller, the GNSS chipset 1050 and/or the mapping chipset 1052). The GNSS module 1050 and/or the mapping module 1052 may each be an optional component of the processor 1020. In an example, an off-board circuit (e.g., a component that is not part of the module 1000) may perform the functions of the GNSS chipset 1050 and send information to the module 1000 (e.g., via the bus 1002). In another example, an off-board circuit (e.g., a component that is not part of the module 1000 such as a distributed and/or scalable computing service) may-perform functions for determining the cooperative positioning data and send information to the module 1000 (e.g., via the bus 1002). The design of the processor 1020 and/or the functionality of various components of the processor 1020 may be varied according to the design criteria of a particular implementation. The processor 1020 is shown sending data to and/or receiving data from the vehicle platform 80, the communication port 1022, and/or the memory 1028.

The memory 1028 may comprise a block (or circuit) 1060 and a block (or circuit) 1062. The block 1060 may store vehicle position data. The block 1062 may store computer readable instructions (e.g., instructions readable by the processor 1020). The vehicle position data 1060 may store various data sets 1070a-1070n. For example, the data sets 1070a-1070n may comprise position coordinates 1070a, calibration data 1070b, a time stamp/delay 1070c, relative position data 1070d, dead reckoning data 1070e, and/or other data 1070n.

The position coordinates 1070a may store location information data calculated and/or received by the module 1000 from signals presented by GNSS satellites and received by the GNSS receiver 212. The signals received by the GNSS receiver 212 may provide data from which a particular resolution of location information positional accuracy may be calculated. In some embodiments, the position coordinates 1070a may not provide sufficient positional accuracy for particular applications (e.g., lane detection, autonomous driving, etc.). The relative position data 107Od may be used to improve the accuracy of the position coordinates 1070a. In some embodiments, the position coordinates 1070a may be calculated by the filter 1024 and/or a component external to the module 1000. In some embodiments, the position coordinates 1070a may be calculated by the GNSS module 1050.

The calibration data 1070b may comprise parameters (e.g., coefficients) used to transform data received from the sensors (e.g., FLC, FLR, FCR, FCS, and IMU). The calibration data 1070b may provide many sets of coefficients (e.g., one set of coefficients for each of the sensors). The calibration data 1070b may be updatable. For example, the calibration data 1070b may store current values as coefficients for the sensors and as the data from the sensors drifts the module 1000 may update the calibration data 1070b in order to maintain accuracy. The format of the calibration data 1070b may vary based on the design criteria of a particular implementation.

The time stamp/delay 1070c may be used to determine an age of the vehicle position data 1060. In one example, the time stamp 1070c may be used to determine if the vehicle position data 1060 should be considered reliable or unreliable (e.g., data older than a pre-determined threshold amount of time may be unreliable). In an example, the time stamp 1070c may record a time in Coordinated Universal Time (UTC) and/or in a local time. The implementation of the time stamp 1070c may be varied according to the design criteria of a particular implementation.

The relative position data 1070d may be used to augment (e.g., improve) a precision of the position coordinates 1070a (e.g., the GNSS position) and/or provide an independent set of position data (e.g., cooperative position information). The relative position data 1070d may comprise ranging data corresponding to the relative position of the vehicle 50 to other vehicles and/or known points. The relative position data 1070d may represent a cooperative position solution (e.g., CoP). The relative position data 1070d may be used to account (e.g., compensate) for the local conditions that may affect an accuracy of the position coordinates 1070a. The relative position data 1070d may provide higher precision location information than the position coordinates 1070a.

The dead reckoning data 1070e may be used to store past and/or present information to determine positions traveled by the vehicle 50. For example, the dead reckoning data 1070e may store a previously determined position of the vehicle 50 (e.g., estimated speed, estimated time of travel, estimated location, etc.). The previously determined position may be used to help determine a current position of the vehicle 50. In some embodiments, the dead reckoning data 1070e may be determined based on data from the sensors 220, 222, and 224, and from the IMU 230 of the vehicle 50 (e.g., an on-board gyroscope and/or wheel click messages). The implementation and/or the information stored to determine the dead reckoning data 1070e may be varied according to the design criteria of a particular implementation.

Various other types of data (e.g., the other data 1070n) may be stored as part of the vehicle position data 1060. For example, the other data 1070n may store trend information for the calibration data 1070b. For example, the other data 1070n may store past data values of the calibration data 1070b and/or current data values of the calibration data 1070b. The past and current data values of the calibration data 107 0b may be compared to determine trends used to extrapolate and/or predict potential future values for the calibration data 1070b. For example, the trend information may be used to continue to refine the calibration data 1070b when the module 1000 is operating in a pure dead reckoning mode (e.g., the location information fails the quality check). In some embodiments, the other data 1070n may store various coordinate systems determined using a procrusting procedure and/or multi-dimensional scaling operations.

The processor 1020 may be configured to execute stored computer readable instructions (e.g., the instructions 1062 stored in the memory 1028). The processor 1020 may perform one or more steps based on the stored instructions 1062. In an example, steps of the instructions 1062 may be executed/performed by the processor 1020 and may implement the one or more of the activation monitor 91, the localization module 93, the map interface 95, the perception module 99, and the ODDA 100. The instructions executed and/or the order of the instructions 1062 performed by the processor 1020 may be varied according to the design criteria of a particular implementation.

The communication port 1022 may allow the module 1000 to communicate with external devices such as the sensors the HD map receiver 210, the GNSS receiver 212, the FLC 220, the corner/side radar sensors 222a-222d, the FLR 224, and the IMU 230. For example, the module 1000 is shown connected to the external electronic bus 1002. In an example, information from the module 1000 may be communicated to an infotainment device for display to a driver. In another example, a wireless connection (e.g., Wi-Fi, Bluetooth, cellular, etc.) to a portable computing device (e.g., a smartphone, a tablet computer, a notebook computer, a smart watch, etc.) may allow information from the module 1000 to be displayed to a user.

The filter 1024 may be configured to perform a linear quadratic estimation. For example, the filter 1024 may implement a Kalman filter. Generally, the filter 1024 may operate recursively on input data to produce a statistically optimal estimate. For example, the filter 1024 may be used to calculate the position coordinates 1070a and/or estimate the accuracy of the position coordinates 1070a. In some embodiments, the filter 1024 may be implemented as a separate module. In some embodiments, the filter 1024 may be implemented as part of the memory 1028 (e.g., the stored instructions 1062). The implementation of the filter 1024 may be varied according to the design criteria of a particular implementation.

The clock 1026 may be configured to determine and/or track a time. The time determined by the clock 1026 may be stored as the time stamp data 1070c. In some embodiments, the clock 1026 may be configured to compare time stamps received from the GNSS receiver.

The module 1000 may be configured as a chipset, a system on chip (SoC) and/or a discrete device. For example, the module 1000 may be implemented as an electronic control unit (ECU). In some embodiments, the module 1000 may be configured to control activation of one or more ADAS features/functions.

The terms "may" and "generally" when used herein in conjunction with "is (are)" and verbs are meant to communicate the intention that the description is exemplary and believed to be broad enough to encompass both the specific examples presented in the disclosure as well as alternative examples that could be derived based on the disclosure. The terms "may" and "generally" as used herein should not be construed to necessarily imply the desirability or possibility of omitting a corresponding element.

The designations of various components, modules and/or circuits as "a"-"n", when used herein, disclose either a singular component, module and/or circuit or a plurality of such components, modules and/or circuits, with the "n" designation applied to mean any particular integer number. Different components, modules and/or circuits that each have instances (or occurrences) with designations of "a"-"n" may indicate that the different components, modules and/or circuits may have a matching number of instances or a different number of instances. The instance designated "a" may represent a first of a plurality of instances and the instance "n" may refer to a last of a plurality of instances, while not implying a particular number of instances.

While particular embodiments have been described, various changes in form and details may be made without departing from the scope of the invention as defined by the appended claims.

## Claims

1. An apparatus comprising:
a plurality of sensors (220, 222, 224) configured to detect information about an exterior environment of a vehicle (50);
a digital map (210) configured to provide information about roadways in a vicinity of said vehicle (50); and
a control unit comprising:
(i) an interface configured to receive (a) sensor status signals, (b) sensor-based information, and (c) map-based information,
(ii) an activation monitor module (91) configured to generate a static operational design domain assessment signal based on map-based operational situation information and on-board sensor-based operational situation information;
(iii) a localization module (93) configured to generate a vehicle location confirmation signal based on the map-based operational situation information and the on-board sensor-based operational situation information; and
(iv) an operational design domain aggregator module (100) configured to
(a) determine whether an operational situation exists that is unsafe for an advanced driver-assistance systems, ADAS, automation feature to be activated or remain active based on said sensor-based information, said map-based information, and said sensor status signals,
(b) generate an activation control signal to restrict activation of said ADAS automation feature when an unsafe operational situation exists, wherein said operational design domain aggregator module (100) is further configured to generate a signal communicating information concerning deactivation of said ADAS automation feature based on the static operational design domain assessment signal and the vehicle location confirmation signal and
(c) to communicate the signal communicating information concerning deactivation of said ADAS automation feature to a control circuit (80) configured to control activation of the ADAS automation feature.

2. The apparatus according to claim 1, wherein said plurality of sensors (220, 222, 224) comprises a forward looking camera (220), a forward looking radar sensor (224), and a plurality of front corner radar sensors (222).

3. The apparatus according to claim 1, wherein said interface of said control unit is further configured to receive satellite-based position information.

4. The apparatus according to claim 1, wherein said ADAS automation feature comprises an autopilot mode of said vehicle.

5. The apparatus according to claim 1, wherein said control unit is configured to determine whether said operational situation exists that is unsafe for activating said advanced driver-assistance systems, ADAS, feature in compliance with at least one of Society of Automotive Engineers, SAE, Level 2 and Automotive Safety Integrity Level, ASIL, A.

6. The apparatus according to claim 1, wherein said unsafe operational situation comprises at least one of (i) absence of a median barrier to oncoming traffic, (ii) absence of a guardrail to an off-road area, (iii) presence of an intersection, (iv) presence of a road legally accessible to vulnerable road users, VRUs, and (v) presence of tollbooths or border stations.

7. The apparatus according to claim 6, wherein when the unsafe operational situation comprises at least the presence of a road legally accessible to vulnerable road users, said vulnerable road users comprise one or more of pedestrians, bicyclists, and school children.

8. A method of controlling activation of an advanced driver-assistance systems, ADAS, automation feature of a vehicle (50), said method comprising the steps of:
detecting information about an exterior environment of said vehicle using a plurality of on-board sensors (220, 222, 224) of said vehicle (50);
obtaining information about roadways in a vicinity of said vehicle (50) using a digital map (210);
receiving one or more sensor status signals from said onboard sensors (220, 222, 224);
generating, using an activation monitor module (91), a static operational design domain assessment signal based on map-based operational situation information and on-board sensor-based situation information;
generating, using a localization module (93), a vehicle location confirmation signal based on the map-based operational situation information and the on-board sensor-based operational situation information;
determining, using an operational design domain aggregator module (100), whether an operational situation exists that is unsafe for said advanced driver-assistance systems, ADAS, automation feature to be activated or remain active based on map-based information, on-board sensor-based information, and said one or more sensor status signals;
generating an activation control signal to restrict activation of said ADAS automation feature when an unsafe operational situation exists;
generating, using the operational design domain aggregator module (100), a signal communicating information concerning deactivation of said ADAS automation feature based on the static operational design domain assessment signal and the vehicle location confirmation signal; and
communicating, using the operational design domain aggregator module, the signal communicating information concerning deactivation of said ADAS automation feature to a control circuit (80) configured to control activation of the ADAS automation feature.

9. The method according to claim 8, wherein said plurality of on-board sensors (220, 222, 224) comprises a forward looking camera (220), a forward looking radar sensor (224), and a plurality of front corner radar sensors (222).

10. The method according to claim 8, further comprising receiving satellite-based position information to determine a location of said vehicle.

11. The method according to claim 8, wherein said ADAS automation feature comprises an autopilot mode of said vehicle.

## Patentansprüche

1. Vorrichtung, die Folgendes umfasst:
mehrere Sensoren (220, 222, 224), konfiguriert zum Erfassen von Informationen über eine Außenumgebung eines Fahrzeugs (50);
eine digitale Karte (210), konfiguriert zum Geben von Informationen über Straßen in der Nähe des genannten Fahrzeugs (50); und
eine Steuereinheit, die Folgendes umfasst:
(i) eine Schnittstelle, konfiguriert zum Empfangen von (a) Sensorstatussignalen, (b) sensorbasierten Informationen und (c) kartenbasierten Informationen,
(ii) ein Aktivierungsüberwachungsmodul (91), konfiguriert zum Erzeugen eines Statisches-Betriebskonzept-Domäne-Beurteilungssignals auf der Basis von kartenbasierten Betriebssituationsinformationen und von Bordsensor-basierten Betriebssituationsinformationen;
(iii) ein Lokalisierungsmodul (93), konfiguriert zum Erzeugen eines Fahrzeugstandortbestätigungssignals auf der Basis der kartenbasierten Betriebssituationsinformationen und der Bordsensor-basierten Betriebssituationsinformationen; und
(iv) ein Betriebskonzept-Domäne-Aggregatormodul (100), konfiguriert zum:
(a) Feststellen auf der Basis der genannten sensorbasierten Informationen, der genannten kartenbasierten Informationen und der genannten Sensorstatussignale, ob eine Betriebssituation vorliegt, die zum Aktivieren oder Aktiviertlassen einer ADAS-(Advanced Driver-Assistence System)-Automatisierungsfunktion unsicher ist,
(b) Erzeugen eines Aktivierungssteuersignals zum Beschränken der Aktivierung der genannten ADAS-Automatisierungsfunktion, wenn eine unsichere Betriebssituation vorliegt, wobei das genannte Betriebsdesign-Domäne-Aggregatormodul (100) ferner zum Erzeugen eines Signals konfiguriert ist, das Informationen bezüglich der Deaktivierung der genannten ADAS-Automatisierungsfunktion auf der Basis des Statisches-Betriebskonzept-Domäne-Beurteilungssignals und des Fahrzeugstandortbestätigungssignals übermittelt, und
(c) Übermitteln des Signals, das Informationen bezüglich der Deaktivierung der genannten ADAS-Automatisierungsfunktion an eine Steuerschaltung (80) übermittelt, die zum Steuern der Aktivierung der ADAS-Automatisierungsfunktion konfiguriert ist.

2. Vorrichtung nach Anspruch 1, wobei die genannten mehreren Sensoren (220, 222, 224) eine nach vorne gerichtete Kamera (220), einen nach vorne gerichteten Radarsensor (224) und mehrere vordere Eckradarsensoren (222) umfasst.

3. Vorrichtung nach Anspruch 1, wobei die genannte Schnittstelle der genannten Steuereinheit ferner zum Empfangen satellitenbasierter Positionsinformationen konfiguriert ist.

4. Vorrichtung nach Anspruch 1, wobei die genannte ADAS-Automatisierungsfunktion einen Autopilot-Modus des genannten Fahrzeugs umfasst.

5. Vorrichtung nach Anspruch 1, wobei die genannte Steuereinheit konfiguriert ist zum Feststellen, ob die genannte Betriebssituation vorliegt, die zum Aktivieren der genannten ADAS-(Advanced Driver-Assistance Systems)-Funktion gemäß SAE (Society of Automotive Engineers) Level 2 und/oder ASIL (Automotive Safety Integrity Level) A unsicher ist.

6. Vorrichtung nach Anspruch 1, wobei die genannte unsichere Betriebssituation mindestens eines umfasst von: (i) Fehlen einer Mittelleitplanke zum Gegenverkehr, (ii) Fehlen einer Leitplanke zu einem Straßenrandbereich, (iii) Vorhandensein einer Kreuzung, (iv) Vorhandensein einer für ungeschützte Verkehrsteilnehmer (VRUs) rechtlich zugänglichen Straße und (v) Vorhandensein von Mautstellen oder Grenzübergängen.

7. Vorrichtung nach Anspruch 6, wobei, wenn die unsichere Betriebssituation mindestens das Vorhandensein einer für ungeschützte Verkehrsteilnehmer rechtlich zugänglichen Straße umfasst, die genannten ungeschützten Verkehrsteilnehmer eines oder mehrere von Fußgängern, Radfahrern und Schulkindern umfassen.

8. Verfahren zum Steuern der Aktivierung einer ADAS-(Advanced Driver Assistence System)-Automatisierungsfunktion eines Fahrzeugs (50), wobei das genannte Verfahren die folgenden Schritte beinhaltet:
Erkennen von Informationen über eine Außenumgebung des genannten Fahrzeugs mittels mehrerer Bordsensoren (220, 222, 224) des genannten Fahrzeugs (50);
Erhalten von Informationen über Straßen in der Nähe des genannten Fahrzeugs (50) mittels einer digitalen Karte (210) ;
Empfangen eines oder mehrerer Sensorstatussignale von den genannten Bordsensoren (220, 222, 224);
Erzeugen, mittels eines Aktivierungsüberwachungsmoduls (91), eines Statisches-Betriebskonzept-Domäne-Beurteilungssignals auf der Basis von kartenbasierten Betriebssituationsinformationen und Bordsensor-basierten Situationsinformationen;
Erzeugen, mittels eines Lokalisierungsmoduls (93), eines Fahrzeugstandortbestätigungssignals auf der Basis der kartenbasierten Betriebssituationsinformationen und der Bordsensor-basierten Betriebssituationsinformationen;
Feststellen, mittels eines Betriebskonzept-Domäne-Aggregatormoduls (100), ob eine Betriebssituation vorliegt, die für die genannte zu aktivierende oder aktiv zu lassende ADAS-(Advanced Driver Assistence System)-Automatisierungsfunktion unsicher ist, auf der Basis von kartenbasierten Informationen, Bordsensor-basierten Informationen und den genannten ein oder mehreren Sensorstatussignalen;
Erzeugen eines Aktivierungssteuersignal zum Beschränken der Aktivierung der genannten ADAS-Automatisierungsfunktion, wenn eine unsichere Betriebssituation vorliegt;
Erzeugen, mittels des Betriebskonzept-Domäne-Aggregatormoduls (100), eines Signals, das Informationen bezüglich der Deaktivierung der genannten ADAS-Automatisierungsfunktion auf der Basis des Statisches-Betriebskonzept-Domäne-Beurteilungssignals und des Fahrzeugstandortbestätigungssignals übermittelt; und
Übermitteln, mittels des Betriebskonzept-Domäne-Aggregatormoduls, des Signals, das Informationen bezüglich der Deaktivierung der genannten ADAS-Automatisierungsfunktion übermittelt, an eine Steuerschaltung (80), die zum Steuern der Aktivierung der ADAS-Automatisierungsfunktion konfiguriert ist.

9. Verfahren nach Anspruch 8, wobei die genannten mehreren Bordsensoren (220, 222, 224) eine nach vorne gerichtete Kamera (220), einen nach vorne gerichteten Radarsensor (224) und mehrere vordere Eckradarsensoren (222) umfasst.

10. Verfahren nach Anspruch 8, das ferner das Empfangen von satellitenbasierten Positionsinformationen zum Bestimmen eines Standorts des genannten Fahrzeugs beinhaltet.

11. Verfahren nach Anspruch 8, wobei die genannte ADAS-Automatisierungsfunktion einen Autopilot-Modus des Fahrzeugs umfasst.

## Revendications

1. Appareil comprenant :
une pluralité de capteurs (220, 222, 224) configurés pour détecter des informations sur un environnement extérieur d'un véhicule (50) ;
une carte numérique (210) configurée pour fournir des informations sur des routes dans un voisinage dudit véhicule (50) ; et
une unité de commande comprenant :
(i) une interface configurée pour recevoir (a) des signaux d'état de capteurs, (b) des informations référencées capteurs, et (c) des informations référencées carte,
(ii) un module de surveillance d'activation (91) configuré pour générer un signal d'évaluation de domaine de conception opérationnelle statique sur la base d'informations de situation opérationnelle référencées carte et d'informations de situation opérationnelle référencées capteurs embarqués ;
(iii) un module de localisation (93) configuré pour générer un signal de confirmation d'emplacement de véhicule sur la base des informations de situation opérationnelle référencées carte et des informations de situation opérationnelle référencées capteurs embarqués ; et
(iv) un module agrégateur de domaine de conception opérationnelle (100) configuré pour
(a) déterminer qu'une situation opérationnelle dangereuse existe ou non pour l'activation ou la poursuite de l'activation d'une fonctionnalité d'automatisation d'un système avancé d'aide à la conduite avancé, ADAS, sur la base desdites informations référencées capteurs, desdites informations référencées carte et desdits signaux d'état de capteurs,
(b) générer un signal de commande d'activation pour restreindre l'activation de ladite fonctionnalité d'automatisation ADAS lorsqu'une situation opérationnelle dangereuse existe, dans lequel ledit module agrégateur de domaine de conception opérationnelle (100) est configuré en outre pour générer un signal communiquant des informations concernant la désactivation de ladite fonctionnalité d'automatisation ADAS sur la base du signal d'évaluation de domaine de conception opérationnelle statique et du signal de confirmation d'emplacement de véhicule, et
(c) communiquer le signal communiquant des informations concernant la désactivation de ladite fonctionnalité d'automatisation ADAS à un circuit de commande (80) configuré pour commander l'activation de la fonctionnalité d'automatisation ADAS.

2. Appareil selon la revendication 1, dans lequel ladite pluralité de capteurs (220, 222, 224) comprend une caméra frontale (220), un capteur radar frontal (224) et une pluralité de capteurs radar frontaux d'angle (222).

3. Appareil selon la revendication 1, dans lequel l'interface de ladite unité de commande est configurée en outre pour recevoir des informations de position satellitaires.

4. Appareil selon la revendication 1, dans lequel ladite fonctionnalité d'automatisation ADAS comprend un mode de pilote automatique dudit véhicule.

5. Appareil selon la revendication 1, dans lequel l'unité de commande est configurée pour déterminer que ladite situation opérationnelle dangereuse existe ou non pour l'activation de ladite fonctionnalité de système avancé d'aide à la conduite, ADAS, conformément à au moins l'un du niveau 2 de la Society of Automotive Engineers, SAE, et du niveau d'intégrité de sécurité automobile, ASIL, A.

6. Appareil selon la revendication 1, dans lequel ladite situation opérationnelle dangereuse comprend au moins l'une d'une : (i) absence de barrière centrale à la circulation en sens inverse, (ii) absence de glissière de sécurité vers une zone hors route, (iii) présence d'une intersection, (iv) présence d'une route légalement accessible aux usagers de la route vulnérables, VRU, et (v) présence de postes de péage ou de postes frontaliers.

7. Appareil selon la revendication 6, dans lequel lorsque la situation opérationnelle dangereuse comprend au moins la présence d'une route légalement accessible aux usagers de la route vulnérables, lesdits usagers de la route vulnérables comprennent un ou plusieurs usagers parmi des piétons, cyclistes et écoliers.

8. Procédé de commande de l'activation d'une fonctionnalité d'automatisation de système avancé d'aide à la conduite, ADAS, d'un véhicule (50), ledit procédé comprenant les étapes suivantes :
la détection d'informations sur un environnement extérieur dudit véhicule à l'aide d'une pluralité de capteurs embarqués (220, 222, 224) dudit véhicule (50) ;
l'obtention d'informations sur des routes dans un voisinage dudit véhicule (50) à l'aide d'une carte numérique (210) ;
la réception d'un ou plusieurs signaux d'état à partir desdits capteurs embarqués (220, 222, 224) ;
la génération, à l'aide d'un module de surveillance d'activation (91), d'un signal d'évaluation de domaine de conception opérationnelle statique sur la base d'informations de situation opérationnelle référencées carte et d'informations de situation référencées capteurs embarqués ;
la génération, à l'aide d'un module de localisation (93), d'un signal de confirmation d'emplacement de véhicule sur la base des informations de situation opérationnelle référencées carte et des informations de situation opérationnelle référencées capteurs embarqués ;
la détermination, à l'aide d'un module agrégateur de domaine de conception opérationnelle (100), qu'une situation opérationnelle dangereuse existe ou non pour l'activation ou la poursuite de l'activation d'une fonctionnalité d'automatisation d'un système avancé d'aide à la conduite, ADAS, sur la base desdites informations référencées capteurs, desdites informations référencées carte et desdits signaux d'état de capteurs ;
la génération d'un signal de commande d'activation pour restreindre l'activation de ladite fonctionnalité d'automatisation ADAS quand une situation opérationnelle dangereuse existe ;
la génération, à l'aide du module agrégateur de domaine de conception opérationnelle (100), d'un signal communiquant des informations concernant la désactivation de ladite fonctionnalité d'automatisation ADAS sur la base du signal d'évaluation de domaine de conception opérationnelle statique et du signal de confirmation d'emplacement de véhicule ; et
la communication, à l'aide du module agrégateur de domaine de conception opérationnelle, du signal communiquant des informations concernant la désactivation de ladite fonctionnalité d'automatisation ADAS à un circuit de commande (80) configuré pour commander l'activation de la fonctionnalité d'automatisation ADAS.

9. Procédé selon la revendication 8, dans lequel ladite pluralité de capteurs embarqués (220, 222, 224), comprend une caméra frontale (220), un capteur radar frontal (224) et une pluralité de capteurs radar frontaux d'angle (222).

10. Procédé selon la revendication 8, comprenant en outre la réception d'informations de position satellitaires pour déterminer un emplacement dudit véhicule.

11. Procédé selon la revendication 8, dans lequel ladite fonctionnalité d'automatisation ADAS comprend un mode de pilote automatique dudit véhicule.
